(19) Europäisches Patentamt
European Patent Office
Office européen des brevets

(11) **EP 3 710 193 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **19734239.7**

(22) Anmeldetag: **14.06.2019**

(51) Internationale Patentklassifikation (IPC):
***B23G 5/20*** *(2006.01)*

(52) Gemeinsame Patentklassifikation (CPC):
**B23G 5/20; B23G 2200/143**

(86) Internationale Anmeldenummer:
**PCT/DE2019/100548**

(87) Internationale Veröffentlichungsnummer:
**WO 2019/238175 (19.12.2019 Gazette 2019/51)**

(54) **VERFAHREN ZUM ERZEUGEN EINES GEWINDES**

METHOD FOR PRODUCING A SCREW THREAD

PROCÉDÉ DE PRODUCTION D'UN FILETAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2018 DE 102018114457**

(43) Veröffentlichungstag der Anmeldung:
**23.09.2020 Patentblatt 2020/39**

(73) Patentinhaber: **EMUGE-Werk Richard Glimpel GmbH & Co.KG Fabrik für Präzisionswerkzeuge
91207 Lauf (DE)**

(72) Erfinder:
• **GLIMPEL, Helmut
91207 Lauf (DE)**
• **HECHTLE, Dietmar
91257 Pegnitz (DE)**
• **FUNK, Thomas
91257 Pegnitz (DE)**

(74) Vertreter: **Schröer, Gernot H.
Meissner Bolte Patentanwälte
Rechtsanwälte Partnerschaft mbB
Bankgasse 3
90402 Nürnberg (DE)**

(56) Entgegenhaltungen:
DE-A1-102016 008 477     DE-A1-102016 008 478
JP-A- 2006 082 199

**EP 3 710 193 B1**

**Beschreibung**

Die Erfindung betrifft ein Verfahren zum Erzeugen eines Gewindes gemäß dem Oberbegriff des Anspruchs 1. DE 10 2016 008 478 A1 offenbart ein Beispiel eines solchen Verfahrens.

Ein Gewinde weist einen schraubenlinien- oder helixförmigen Gewindegang mit konstanter Gewindesteigung auf und kann als Innengewinde oder als Außengewinde erzeugt werden. Zum Erzeugen eines Innengewindes wird in aller Regel zunächst ein Kernloch (oder: eine Kernbohrung) im Werkstück erzeugt, das ein Sackloch oder auch ein Durchgangsloch sein kann, und dann in der Innenwandung des Kernloches der Gewindegang erzeugt. Das Kernloch mit Gewinde wird auch als Gewindeloch bezeichnet.

Zur Gewindeerzeugung oder Gewindenachbearbeitung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing,    Erscheinungsjahr:    2004    (ISBN 3-89578-232-7), im Folgenden nur als "EMUGE-Handbuch" bezeichnet. Unter die spanabhebende oder spanende Gewindeerzeugung fallen die Gewindebohrer (vgl. EMUGE-Handbuch, Kapitel 8, Seiten 181 bis 298) und die Gewindefräser (vgl. EMUGE-Handbuch, Kapitel 10, Seiten 325 bis 372) sowie, nur für Außengewinde, die Schneideisen (vgl. EMUGE-Handbuch, Kapitel 11, Seiten 373 bis 404).

Ein Gewindebohrer ist ein Gewindeschneidwerkzeug, dessen Schneiden oder Gewindeschneidzähne entlang eines Außengewindes unter der Gewindesteigung des zu erzeugenden Gewindes angeordnet sind. Beim Erzeugen des Gewindes wird der Gewindebohrer mit zur Werkzeugachse axialem Vorschub und unter Drehung um seine Werkzeugachse mit von der axialen Vorschubgeschwindigkeit entsprechend der Gewindesteigung abhängiger Drehgeschwindigkeit in ein zylindrisches Kernloch in einem Werkstück bewegt, wobei die Werkzeugachse des Gewindebohrers koaxial zur Mittelachse des Kernloches ausgerichtet wird und seine Schneiden permanent mit dem Werkstück an der Kernlochwandung in Eingriff sind (kontinuierlicher Schnitt), so dass ein durchgehender Gewindegang an der Kernlochwandung entsteht. Typische Geometrien eines Gewindebohrers mit dem üblichen Anschnittbereich sind im EMUGE-Handbuch, Kapitel 8, Seiten 250 und 251 und 284 und 285, beschrieben. Die Gewindeschneidzähne weisen in der Schneidrichtung im Querschnitt senkrecht zur Helix am Außenrand ein Schneidprofil oder Wirkprofil und nach innen anschließend eine Spanfläche auf und am entgegengesetzt zur Schneidrichtung anschließenden Zahnrücken Freiflächen oder Freiwinkel auf, so dass dort keine Berührung und damit keine Reibung mit dem Werkstück stattfindet. Eine typische Verteilung der einzelnen Gewindewirkprofile der im Anschnittsbereich schräg angeschliffenen Gewindeschneidzähne mit der entsprechenden Spanaufteilung ist im EMUGE-Handbuch, Kapitel 9, Seite 322, gezeigt.

Der Gewindeschneidvorgang mit einem Gewindebohrer ist zusammen mit einem typischen Drehmomentverlauf im EMUGE-Handbuch, Kapitel 8, Seite 255, erläutert. Nach dem Schneidprozess des Gewindebohrers bis zum Eingriff aller Anschnittzähne wird die Maschinenspindel abgebremst bis zum Stillstand. Nun wird der Rücklauf oder die Reversierbewegung gestartet und der Zahnrücken des beim Gewindeschneiden vorausgehenden Gewindeschneidzahnes schert den noch in der Bohrung stehenden Span an seiner freien Rückseite ab und quetscht die Spanwurzel zwischen der Freifläche und der Lochwandung zurück.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404)

Gewindefurcher sind Gewindewerkzeuge mit einem annähernd spiral- oder schraubenförmig umlaufenden Gewindeprofil, entlang dem mehrere Drückstollen (auch als Formzähne, Furchzähne oder Formkeile bezeichnet) angeordnet sind, die durch zueinander versetzte weiter nach außen ragende und im Allgemeinen abgerundete Polygon-Eckbereiche eines annähernd polygonalen Querschnittes des Gewindefurchers gebildet sind. Beim Erzeugen des Gewindes wird der Gewindefurcher ähnlich wie der Gewindebohrer mit zur Werkzeugachse axialem Vorschub und unter Drehung um seine Werkzeugachse in ein zylindrisches Kernloch in einem Werkstück bewegt, wobei die Werkzeugachse des Gewindebohrers koaxial zur Mittelachse des Kernloches ausgerichtet wird. Die Drehgeschwindigkeit und die axiale Vorschubgeschwindigkeit werden entsprechend der Gewindesteigung aufeinander abgestimmt. Die Drückstollen des Gewindefurchers sind permanent mit dem Werkstück an der Kernlochwandung in Eingriff und drücken den Gewindegang durch plastische Verformung in die Kernlochwandung, so dass ein durchgehender Gewindegang an der Kernlochwandung entsteht. Typische Geometrien eines Gewindefurchers mit dem üblichen Anfurchbereich sind im EMUGE-Handbuch, Kapitel 9, Seiten 308 und 309 beschrieben. Eine typische Verteilung der einzelnen Gewindewirkprofile der im Anfurchbereich ansteigenden Gewindefurchzähne ist im EMUGE-Handbuch, Kapitel 9, Seite 322, gezeigt. Der Gewindefurchvorgang mit einem Gewindefurcher ist zusammen mit einem typischen Drehmomentverlauf im EMUGE-Handbuch, Kapitel 9, Seite 310, erläutert.

Gewindebohrer und Gewindefurcher arbeiten mit einer ausschließlich axialen Voschub- oder Arbeitsbewegung mit gemäß der Gewindesteigung synchronisierter Drehbewegung um die eigene Werkzeugachse. Der Drehsinn von Gewindebohrer und Gewindefurcher beim Erzeugen des Gewindes entspricht dem Windungssinn des zu erzeugende Gewindes. Wenn der Gewindegang erzeugt ist oder am Ende der Erzeugung des Gewindeganges wird das Werkzeug abgebremst und an einem Umkehrpunkt zum Stillstand gebracht. Die Abbremsung vor dem Erreichen des Reversier- oder Umkehrpunkts wird normalerweise durch gemäß der konstanten Gewindesteigung synchronisierte Reduzierung von axialer Vorschubgeschwindigkeit und Drehzahl bis auf jeweils einen Wert 0 bewirkt. Nun wird zum Zurückholen des Werkzeugs aus dem Werkstück eine Rückwärts- oder Reversierbewegung eingeleitet, bei der die axiale Vorschubrichtung und die Drehrichtung genau entgegengesetzt zur Arbeitsbewegung sind und die axialen Vorschubbewegung und Drehbewegung wieder gemäß der Gewindesteigung synchronisiert sind, um das Gewinde nicht zu beschädigen.

Grundlagen zu dem Programmaufbau für CNC-Maschinen hinsichtlich Gewindeerzeugung sind in EMUGE-Handbuch, Kapitel 8, Seite 281, und Kapitel 10, Seiten 357 bis 359 angegeben.

Das Kernlochbohren wird im EMUGE-Handbuch, Kapitel 7, Seiten 161 bis 179 beschrieben.

Ferner sind in verschiedenen Ausführungen Kombinationswerkzeuge bekannt, mit denen mit demselben Werkzeug in einem Arbeitsschritt ein Gewindeloch im Vollmaterial des Werkstückes, also ohne vorherige Bohrung eines Kernloches, erzeugt wird.

Hierunter zählen die ausschließlich spanabhebend arbeitenden Bohrgewindefräser (BGF) (vgl. EMUGE-Handbuch, Kapitel 10, Seite 354) und der sogenannte Zirkularbohrgewindefräser (ZBGF) ((vgl. EMUGE-Handbuch, Kapitel 10, Seite 355).

Unterschiedliche Kombinationen von Bohrbereich und Gewindeerzeugungsbereich in einem Kombinationswerkzeug zur Erzeugung eines Gewindeloches sind auch aus der DE 10 2005 022 503 A1 bekannt, unter anderem auch die Kombination eines axial arbeitenden Bohrbereichs und eines axial arbeitenden Gewindefurchbereiches in einem Werkzeug.

Aus der DE 10 2016 008 478 A1 ist ein weiteres Kombinationswerkzeug bekannt, mit dem in einem Arbeitsschritt ein Gewindeloch in einem Werkstück allein durch eine axiale Arbeitsbewegung erzeugt wird. Mit diesem Kombinationswerkzeug, das als Einschuss-Gewindebohr-Werkzeug bezeichnet wird, werden die Kernlochbohrung und das Innengewinde-Schneiden in einem gemeinsamen Werkzeughub durchgeführt. Das Einschuss-Gewindebohr-Werkzeug weist an seiner Bohrerspitze eine Hauptschneide und ein in einer Gewindebohr-Richtung nacheilendes Gewindeprofil mit zumindest einem Gewinde-Schneidzahn auf.

In diesem bekannten Verfahren erfolgt ein Gewindebohr-Hub und anschließend ein gegenläufiger Reversier-Hub. Im Gewindebohr-Hub erzeugt einerseits die Hauptschneide die Kernlochbohrung und andererseits das Gewindeprofil das Innengewinde an der Innenwandung der Kernlochbohrung bis zum Erreichen einer nutzbaren Soll-Gewindetiefe. Der Gewindebohr-Hub wird bei einem Gewindebohr-Vorschub mit dazu synchronisierter Drehzahl des Gewindebohr-Werkzeugs durchgeführt. In einem nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub und damit synchronisierter Reversier-Drehzahl. Dadurch wird gewährleistet, dass das Gewindeprofil des Gewindebohr-Werkzeugs im Gewindegang des Innengewindes belastungsfrei bewegt wird.

In einer in DE 10 2016 008 478 A1 als Stand der Technik bezeichneten Variante wird zum Ende des Gewindebohr-Hubes der Gewindebohr-Prozess verlangsamt, das heißt der Gewindebohr-Vorschub mit damit (gemäß der gleich bleibenden Gewindesteigung) synchronisierter Gewindebohr-Drehzahl bis auf 0 reduziert. Diese Verzögerung des Gewindeschneid-Prozesses bis auf eine Gewindebohr-Drehzahl von Null führe jedoch im Stand der Technik zu einer übermäßig großen Schneidbelastung des Gewindeprofils, die zu einem Ausbruch der Schneidzähne oder zu einem Werkzeugbruch führen könne.

Um die Werkzeug-Belastung zu reduzieren, wird nun stattdessen in DE 10 2016 008 478 A1 vorgeschlagen, dass nach dem Gewindebohr-Hub nicht unmittelbar der Reversier-Hub folgt, sondern vielmehr zuvor ein Nutformschritt oder Nutform-Hub erfolgt, bei dem eine an das Innengewinde anschließende Umlaufnut ohne Gewindesteigung gebildet wird, in der das Gewindeprofil des Gewindebohr-Werkzeuges belastungsfrei drehen kann. Das Gewindebohr-Werkzeug wird über die Soll-Gewindetiefe für den Gewindebohr-Hub hinaus bis zum Erreichen einer Soll-Bohrungstiefe bewegt, und zwar mit einem Nutform-Vorschub sowie einer Nutform-Drehzahl, die zueinander nicht synchronisiert sind und unterschiedlich zum Gewindebohr-Vorschub und zur Gewindebohr-Drehzahl sind. Auf diese Weise könne die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt. Die Umlaufnut wird während des Nutform-Hubes mit Hilfe der Hauptschneide sowie des Gewinde-Schneidzahns (oder allgemeiner Gewindezahn) des Gewindeprofils am Gewindebohr-Werkzeug erzeugt. Bei Erreichen der Soll-Bohrungstiefe wird der Nutform-Vorschub auf 0 reduziert. Gleichzeitig wird auch die Nutform-Drehzahl auf 0 reduziert, um die für den Reversier-Hub erforderliche Drehrichtungsumkehr zu ermöglichen.

Beim Start des Reversier-Hubes wird das bekannte Gewindebohr-Werkzeug so angesteuert, dass der Gewinde-Schneidzahn belastungsfrei in den Gewindegang-Auslauf eingefahren werden kann, der in die Umlaufnut einmündet. Wie das allerdings geschehen soll, ist in DE 10 2016 008 478 A1 nicht offenbart.

Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie damit synchronisierter Reversier-Drehzahl, wodurch der Gewinde-Schneidzahn ohne Materialabtrag aus der Gewindebohrung herausgedreht werden kann. Während der Durchführung des Gewindebohr-Hubes, des Nutform-Hubes und des Reversier-Hubes bleiben die Kernbohrungs-Längsachse und die Rotationsachse des Gewindebohr-Werkzeuges durchgängig koaxial zueinander ausgerichtet.

Das Gewindebohr-Werkzeug gemäß DE 10 2016 008 478 A1 weist einen Spannschaft und einen daran anschließenden Gewindebohr-Körper auf, entlang dessen Längsachse sich zumindest eine Spannut bis zu einer stirnseitigen Hauptschneide an der Bohrerspitze erstreckt. An der stirnseitigen Hauptschneide laufen eine die Spannut begrenzende Spanfläche und eine stirnseitige Freifläche der Bohrerspitze zusammen. In der Werkzeug-Umfangrichtung betrachtet kann die Spannut durch zumindest einen Bohrersteg begrenzt sein. Die Spanfläche der Spannut kann unter Bildung einer Nebenschneide in eine außenumfangsseitige Rückenfläche des Bohrerstegs übergehen. An der außenumfangsseitigen Rückenfläche des Bohrersteges kann das Gewindeprofil mit zumindest einem Gewinde-Schneidzahn ausgebildet sein. Die Zahnhöhe des Schneidzahns ist in der Radialrichtung so bemessen, dass der Schneidzahn die Hauptschneide in der Radialrichtung nach außen um einen Radialversatz überragt. Gegebenenfalls kann der Schneidzahn in der Radialrichtung nach außen flächenbündig die Hauptschneide verlängern. Alternativ und/oder zusätzlich kann der Schneidzahn in der Axialrichtung betrachtet um einen Axialversatz hinter der Hauptschneide angeordnet sein. In einer bevorzugten Ausführungsvariante kann das Gewindebohr-Werkzeug gemäß DE 10 2016 008 478 A1 drei Bohrerstege aufweisen. Jeder dieser Bohrerstege ist zumindest mit einem Gewinde-Schneidzahn ausgebildet. Es können in der Bohrer-Umfangsrichtung hintereinander ein Vorschneidzahn, ein Mittelschneidzahn und ein Fertigbearbeitungszahn unterschiedlicher Schneidengeometrie am Bohrer ausgebildet sein. Die Schneidzähne sind in der Axialrichtung zueinander versetzt am Gewindebohr-Werkzeug ausgebildet. Deren Versatzmaße sind so mit der Gewindebohr-Drehzahl und mit dem Gewindebohr-Vorschub abgestimmt, dass ein einwandfreies Gewindeschneiden gewährleistet ist.

Die DE 10 2016 008 477 A1 offenbart ein ähnliches Verfahren wie die DE 10 2016 008 478 A1 und offenbart zusätzlich eine Räumschneide an dem Gewindeprofil mittels der beim Reversierhub eine Räumnut zum Herausführen des Gewinde-Schnedizahnes erzeugt wird..

Die Erfindung beruht nun zunächst auf der überraschenden Erkenntnis, dass bei dem bekannten Verfahren und Werkzeug gemäß der DE 10 2016 008 478 A1 während der Abbremsung des Werkzeugs in dem Nutform-Hub dennoch noch axiale Kräfte auf die Gewindeschneidzähne entstehen, welche zu einer Werkzeugbelastung und entsprechenden Verkürzung der Standzeit führen.

Der Erfindung liegt nun die Aufgabe zugrunde, ein Verfahren zum Erzeugen eines Gewindes, insbesondere Innengewindes, anzugeben, wobei das Innengewinde insbesondere zusammen mit einem Gewindeloch im Vollmaterial oder auch in einem bereits erzeugten Kernloch im Werkstück erzeugt werden kann.

Insbesondere soll bei dem bekannten Verfahren gemäß DE 10 2016 008 478 A1 die Belastung auf das Werkzeug durch axiale Kräfte während des Nutformschrittes, bei dem die Umlaufnut gebildet wird, weiter verringert werden.

Zur Lösung dieser Aufgabe geeignete Ausführungsformen und Gegenstände gemäß der Erfindung sind in den Patentansprüchen angegeben, die auf ein Verfahren zum Erzeugen eines Gewindes, insbesondere Innengewindes, mit den Merkmalen des unabhängigen Patentanspruchs 1, gerichtet sind. Weitere Ausgestaltungen und Weiterbildungen gemäß der Erfindung ergeben sich aus den jeweils abhängigen Patentansprüchen.

Das Verfahren ist zum Erzeugen eines Gewindes mit einer vorgegebenen Gewindesteigung und mit einem vorgegebenen Gewindeprofil in einem Werkstück vorgesehen,

     a) wobei ein Werkzeug verwendet wird, das um eine durch das Werkzeug verlaufende Werkzeugachse drehbar und axial zur Werkzeugachse bewegbar ist und das einen Gewindeerzeugungsbereich aufweist,
     b) wobei der Gewindeerzeugungsbereich wenigstens einen Gewindezahn aufweist, der an die vorgegebene Gewindesteigung angepasst ausgebildet und angeordnet ist, und ein Wirkprofil aufweist, das dem Gewindeprofil des Gewindes entspricht,
     c) und wobei das Werkzeug in einer Arbeitsbewegung während einer ersten Arbeitsphase in das Werkstück oder zu dem Werkstück hin bewegt wird,
     d) wobei die Arbeitsbewegung eine Drehbewegung mit einem vorgegebenen Drehsinn um die Werkzeugachse und eine gemäß der Gewindesteigung mit der Drehbewegung synchronisierte axiale Vorschubbewegung in einer axialen Vorwärtsrichtung axial zur Werkzeugachse umfasst, derart, dass einer vollen Umdrehung des Werkzeugs um die Werkzeugachse ein axialer Vorschub des Werkzeugs um die vorgegebene Gewindesteigung entspricht,
     e) wobei während der Arbeitsbewegung der Gewindeerzeugungsbereich das Gewinde erzeugt,
     f) wobei das Werkzeug in einer an die Arbeitsbewegung anschließenden Abbremsbewegung während einer zweiten Arbeitsphase weiter in das Werkstück in derselben Vorwärtsrichtung wie bei der Arbeitsbewegung bis zu einem Umkehrpunkt bewegt wird,

g) wobei die Abbremsbewegung eine Drehbewegung mit gleichbleibendem Drehsinn wie bei der Arbeitsbewegung umfasst,

h) wobei während der Abbremsbewegung die axiale Vorschubbewegung abhängig vom Drehwinkel der Drehbewegung des Werkzeugs gemäß einer vorab gespeicherten eindeutigen Beziehung zwischen dem axialen Vorschub des Werkzeugs und dem Drehwinkel gesteuert wird und

i) wobei der axiale Vorschub des Werkzeugs bei einer vollen Umdrehung zumindest während eines Teils der Abbremsbewegung betragsmäßig kleiner als die Gewindesteigung ist und beim Umkehrpunkt Null ist,

j) wobei während der Abbremsbewegung in mehreren aufeinanderfolgenden Abbremsschritten zueinander unterschiedliche Funktionen zwischen dem axialen Vorschub des Werkzeugs und dem Drehwinkel gewählt oder eingestellt werden,

k) wobei während den mehreren Abbremsschritten der axiale Vorschub eine lineare Funktion des Drehwinkels ist und wobei die Steigung, d.h. die Ableitung des axialen Vorschubs nach dem Drehwinkel, in jedem dieser Abbremsschritte konstant ist und betragsmäßig von einem Abbremsschritt zu einem darauffolgenden Abbremsschritt abnimmt.

Während der Abbremsbewegung in der zweiten Arbeitsphase wird im Allgemeinen eine Umlauf- oder Umfangsnut oder ein Freistich in dem Werkstück erzeugt, weshalb der Vorgang in der zweiten Arbeitsphase außer als Abbremsvorgang oder -bewegung auch als Umfangsnuterzeugung oder Umlaufnuterzeugung oder Freistichbewegung, bei rein schneidendem Werkzeug auch als Freischneidbewegung bezeichnet werden kann deshalb.

In der Regel beginnt der Abbremsvorgang oder die zweite Arbeitsphase bei einem axialen Vorschub, der der Gewindesteigung der ersten Arbeitsphase entspricht. Der Abbremsvorgang ist als Abbremsung von der anfänglichen Gewindesteigung bis auf Null am Ende oder an einem Umkehrpunkt zu verstehen und muss nicht über das gesamte Drehwinkelintervall eine Verringerung des axialen Vorschubs abhängig vom Drehwinkel (Abbremsbeschleunigung), insbesondere auf Werte unterhalb der Gewindesteigung beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt.

Eine Funktion, die die Beziehung zwischen axialem Vorschub (oder: der axialen Eindringtiefe) und dem Drehwinkel definiert, kann einen kontinuierlichen Definitionsbereich und Wertebereich oder auch einen diskreten Definitionsbereich und Wertebereich mit diskreten vorab gespeicherten oder vorab ermittelten Wertepaaren oder Wertetabellen aufweisen.

In einer Ausführungsform ist auch die Drehgeschwindigkeit der Drehbewegung beim Umkehrpunkt Null.

In einer Ausführungsform ist der gesamte oder aufsummierte axiale Vorschub des Werkzeuges während der Abbremsbewegung zwischen dem 0,1-fachen bis 2-fachen der Gewindesteigung gewählt oder eingestellt.

Diese Ausführungsform gemäß der Erfindung kann besonders einfach implementiert werden, indem für die Arbeitsbewegung eine NC-Steuerung für einen Gewindeprozess, beispielsweise eine G33 Wegbedingung, mit der Gewindesteigung des Gewindes verwendet wird und in den mehreren Abbremsschritten ebenfalls eine, vorzugsweise die gleiche, NC-Steuerung für einen Gewindeprozess, beispielsweise eine G33 Wegbedingung, mit der jeweiligen konstanten Steigung als Gewindesteigungsparameter verwendet wird.

In einer Ausführungsform sind die unterschiedlichen Funktionen aufeinanderfolgender Abbremsschritte stetig aneinander gesetzt.

In einer Ausführungsform ist, insbesondere während eines Egalisierungsschrittes, der axiale Vorschub während der Abbremsbewegung in einem Drehwinkel-Teilintervall Null und/oder erfolgt in einem Drehwinkel-Teilintervall in zur Vorwärtsrichtung der Arbeitsbewegung entgegengesetzter Rückwärtsrichtung.

In einer Ausführungsform wird nach Erreichen des Umkehrpunktes eine Reversierbewegung des Werkzeuges eingeleitet, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst.

In einer vorteilhaften Ausführungsform wird die Reversierbewegung in der ersten Reversierphase mit der betragsmäßig gleichen, nur in der Drehrichtung und Vorschubrichtung invertierten vorab gespeicherten eindeutigen Beziehung, insbesondere Funktion oder Abfolge von Funktionen, zwischen dem axialen Vorschub des Werkzeugs und dem Drehwinkel gesteuert wie in der Abbremsbewegung während der zweiten Arbeitsphase, ggf. unter Auslassung oder Verkürzung des Egalisisierungsschrittes, sofern vorhanden.

In einer Ausführungsform wird nun ein kombiniertes Werkzeug verwendet, das um eine durch das Werkzeug verlaufende Werkzeugachse drehbar und axial zur Werkzeugachse bewegbar ist und das einen Bohrbereich an einem vorderen oder freien Ende und einen Gewindeerzeugungsbereich, der axial zur Werkzeugachse relativ zum Bohrbereich versetzt angeordnet ist und radial zur Werkzeugachse weiter nach außen ragt als der Bohrbereich, aufweist. Nun erzeugt während der Arbeitsbewegung der Bohrbereich des Werkzeugs ein Kernloch in dem Werkstück und der Gewindeerzeugungsbereich einen unter der vorgegebenen Gewindesteigung verlaufenden Gewindegang in der Oberfläche dieses Kernloches

Die Erfindung wird im Folgenden anhand von Ausführungsbeispielen weiter erläutert. Dabei wird auch auf die Zeichnung Bezug genommen, in deren

FIG 1 ein kombiniertes Bohr- und Gewindeerzeugungswerkzeug bei der Erzeugung eines Gewindeloches,

FIG 2 ein mit dem Verfahren oder dem Werkzeug gemäß FIG 1 hergestelltes Gewindeloch in einem Längsschnitt

FIG 3 in einem Diagramm der Graph der axialen Eindringtiefe als Funktion des Drehwinkels für einen gesamten Gewindelocherzeugungszyklus,

FIG 4 der Endabschnitt des in FIG 2 dargestellten Graphen in der Vorwärtsbewegung als Abbremsvorgang und

FIG 5 der Endabschnitt des in FIG 1 dargestellten Graphen in der Rückwärtsbewegung als Beschleunigungsvorgang,

FIG 6 ein Egalisierungsschritt in einer ersten Ausführung,

FIG 7 ein Egalisierungsschritt in einer zweiten Ausführung,

FIG 8 drei Ausführungsbeispiele von Steuerungskurven,

FIG 9 drei weitere Ausführungsbeispiele von Steuerungskurven,

FIG 10 zwei nicht zur Erfindung gehörende Ausführungsbeispiele von Steuerungskurven und

FIG 11 ein Ausführungsbeispiel für die Abhängigkeit des Drehwinkels und der Eindringtiefe von der Zeit

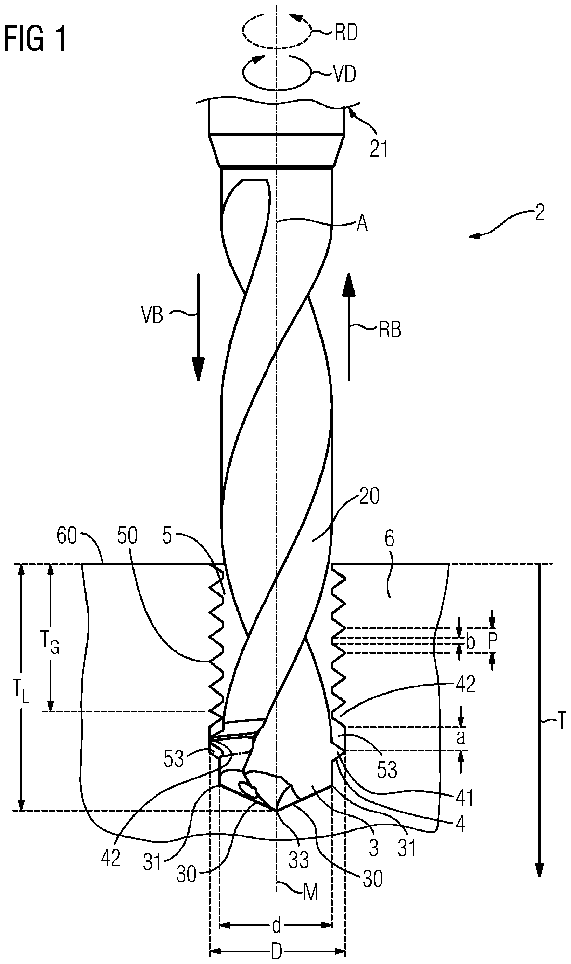

jeweils schematisch dargestellt sind. Einander entsprechende Teile und Größen sind in den FIG 1 bis 11 mit denselben Bezugszeichen versehen.

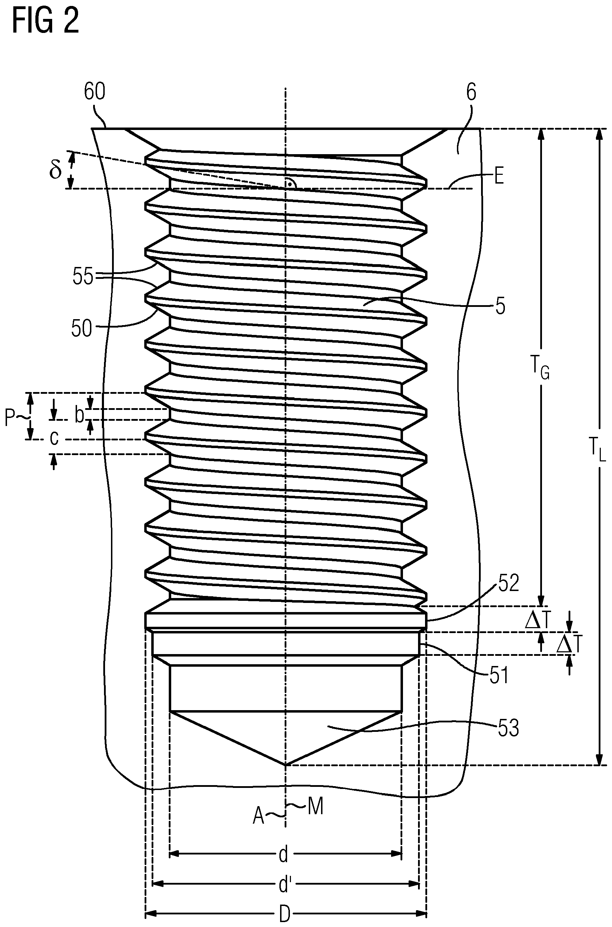

Erste Ausführungsbeispiele des Werkzeugs und Verfahrens gemäß der Erfindung werden im Folgenden anhand von FIG 1 und FIG 2 erläutert.

Das in FIG 1 gezeigte Werkzeug 2 wird zum Erzeugen eines Gewindeloches 5 in einem Werkstück 6 eingesetzt. Das Werkzeug 2 ist ein kombiniertes Werkzeug und erzeugt sowohl das Kernloch in dem Werkstück mit dem vorgegebenen Kernlochdurchmesser des Gewindes als auch das Innengewinde in dem Kernloch, d.h. den Gewindegang 50 des Innengewindes in der Mantelwandung oder Innenwandung des Kernloches. Dazu wird das Werkzeug in einer Arbeitsbewegung oder einem Arbeitshub oder einer Gewindeerzeugungsbewegung, die aus einer Drehbewegung um die Werkzeugachse einerseits und einer axialen Vorschubbewegung entlang der Werkzeugachse zusammengesetzt ist, in das Werkstück 6 bewegt.

Die FIG 2 zeigt ein Ausführungsbeispiel eines Gewindeloches 5 mit einem Gewindegang 50 und einem Gewindeprofil 55, das mit einem Verfahren oder einem Werkzeug gemäß der Erfindung, beispielsweise einem Werkzeug nach FIG 1, hergestellt werden kann.

Der Gewindesteigungswinkel $\delta$ des Gewindeganges 50 mit der Gewindesteigung P und dem Durchmesser D wird bezüglich einer Transversalebene E, die senkrecht zur Werkzeugachse A gerichtet ist, gemessen und ist aus der folgenden Beziehung

$$P = \pi \cdot D \tan \cdot \delta$$

berechenbar.

Das Werkzeug 2 ist, wie z.B. in FIG 1 dargestellt, einerseits um eine durch das Werkzeug 2 verlaufende Werkzeugachse A drehbar oder rotatorisch bewegbar und andererseits entlang oder axial zur Werkzeugachse A axial oder translatorisch bewegbar. Diese beiden Bewegungen werden, vorzugsweise durch eine Kontrolleinheit, insbesondere Maschinensteuerung, aufeinander abgestimmt oder synchronisiert, während das Werkzeug 2 an einer Oberfläche 60 des Werkstücks 6 und bis auf eine Lochtiefe LT in das Werkstück 6 eindringt. Die Werkzeugachse A bleibt während der Erzeugung des Gewindeloches 5 relativ zum Werkstück 6 ortsfest oder lagekonstant. Die Gewindemittelachse M des Gewindeloches 5 ist während des Prozesses koaxial zur Werkzeugachse A oder fällt mit dieser zusammen.

Das Werkzeug 2 ist vorzugsweise mittels eines Koppelbereichs an einem axial zur Werkzeugachse A verlaufenden oder ausgebildeten Werkzeugschaft 21 mittels eines nicht dargestellten Drehantriebs, insbesondere einer Werkzeugmaschine und/oder Antriebs- oder Werkzeugmaschinenspindel, rotatorisch oder in einer Drehbewegung um seine Werkzeugachse A in einem Vorwärtsdrehsinn VD und in einem entgegengesetzten Rückwärtsdrehsinn RD antreibbar. Ferner ist das Werkzeug 2 axial in einer axialen Vorwärtsbewegung VB oder einer axialen Rückwärtsbewegung RB axial zur Werkzeugachse A bewegbar, insbesondere mittels eines Axialantriebs, der wiederum in der Werkzeugmaschine und/oder Antriebs- oder Werkzeugmaschinenspindel vorgesehen sein kann.

An einem vom Koppelbereich des Schaftes 21 abgewandten freien Endbereich des Werkzeuges 2 ist ein Arbeitsbereich 20 vorgesehen. Der Arbeitsbereich 20 umfasst einen Bohrbereich 3 am stirnseitigen Ende des Werkzeuges 2 und einen axial bezüglich der Werkzeugachse A zum Bohrbereich 3 nach hinten oder zum Schaft 21 hin versetzten Gewindeerzeugungsbereich 4.

Der Bohrbereich 3 umfasst stirnseitige Bohr(haupt)schneiden 30, die schräg, insbesondere konisch, axial nach vorne verlaufend angeordnet sein können und in einer Bohrerspitze 33 zulaufen können, insbesondere in einem sich zur Bohrerspitze 33 verjüngenden Konus. Diese stirnseitigen Bohrschneiden 30 sind in dem Vorwärtsdrehsinn VD schneidend, im dargestellten Ausführungsbeispiel rechtschneidend, ausgebildet und tragen bei der Vorwärtsbewegung VB bei gleichzeitiger Drehbewegung in Vorwärtsdrehsinn VD Material des Werkstücks 6, das axial vor dem Werkzeug 2 liegt, spanabhebend ab.

Außerdem umfasst der Bohrbereich 3 vorzugsweise auch Führungsbereiche 31 an seiner Außenwandung, die zur Eigenführung des Werkzeugs 2 in der erzeugten Bohrung dienen können und dazu an der Kernlochwandung anliegen oder nur wenig davon beabstandet sind. Anstelle oder zusätzlich zu den Führungsbereichen können auch Umfangsschneiden oder Mantelschneiden vorgesehen sein, die die Mantelwandung des Kernloches spanend bearbeiten oder vorbereiten, indem sie sich radial zur Werkzeugachse A nach außen anschließende Bereiche des Werkstücks 6 spanabhebend abtragen. Diese Mantelschneiden können dazu dienen, eine ausreichende Oberflächengüte auch der Mantelwandung oder Kernlochinnenwandung zu erreichen und verlaufen insbesondere vorwiegend parallel oder leicht nach hinten geneigt (zur Reibungsreduzierung) zur Werkzeugachse A auf einem radialen Abstand d/2 von der Werkzeugachse A, der dem halben Kernlochinnendurchmesser entspricht. Die Führungsbereiche 31 oder Umfangs- oder Mantelschneiden können unmittelbar an die stirnseitigen Bohrschneiden 30 anschließend ausgebildet und/oder angeordnet sein oder auch axial von diesen etwas versetzt sein.

Der Bohrbereich 3 hat somit einen Außendurchmesser oder Bohrdurchmesser d und erzeugt folglich eine Bohrung oder ein Kernloch mit diesem Innendurchmesser d im Werkstück 6. Die Bohrschneiden 30 und 31 kann man auch als Kernlochschneiden bezeichnen, da sie das Kernloch des Gewindeloches 5 erzeugen. Die äußerste zur Werkzeugachse A radiale Abmessung der Bohr- oder Kernlochschneiden 30 und 31 bestimmen dabei den Kernlochinnendurchmesser d.

Hinter dem Bohrbereich 3 oder den Bohr- oder Kernlochschneiden 30 und 31 nachgelagert oder in zur axialen Vorwärtsbewegung VB entgegengesetzter Richtung axial versetzt angeordnet umfasst das Werkzeug 2 einen Gewindeerzeugungsbereich 4 mit einem oder mehreren, d.h. einer Anzahl n größer gleich 1, Gewindeerzeugungszähnen oder Gewindeerzeugungsstegen.

Wenn es mehrere (n > 1) Gewindeerzeugungszähne oder Gewindeerzeugungsstege sind, so sind diese wenigstens annähernd entlang einer Helix oder Schraubenlinie, deren Steigung der Gewindesteigung P des zu erzeugenden Innengewindes oder Gewindeganges 50 entspricht, in axialer Richtung versetzt zueinander angeordnet sind. Unter eine solche Anordnung entlang einer Helix oder Schraubenlinie oder eines Gewindeganges fallen auch Ausführungsformen, bei denen Gewindezähne leicht seitlich zu einer Ideallinie versetzt sind, beispielsweise um Gewindewirkprofile auch mit unterschiedlicher Bearbeitung an den Gewindeflanken oder eine unterschiedliche Aufteilung oder Überlagerung der Gewindewirkprofile auf das bzw. zu dem Gesamtgewindeprofil zu realisieren. Wichtig ist hinsichtlich dieser Anordnung der Gewindezähne lediglich, dass sich ihre Anordnung bei der Arbeitsbewegung auf einen Gewindegang im Werkstück mit derselben Gewindesteigung P abbildet.

Im dargestellten Ausführungsbeispiel sind zwei oder mehrere Gewindeerzeugungszähne 41 und 42 vorgesehen, die beispielsweise um eine halbe Gewindesteigung P zueinander axial versetzt sind, in Winkelrichtung also entsprechend einer halben Umdrehung oder um 180° versetzt sind. Die Gewindeerzeugungszähne, insbesondere 41 und 42, ragen radial von der Werkzeugachse A weiter nach außen als die Bohr- oder Kernlochschneiden 30 und 31, Der Außendurchmesser des Gewindeerzeugungsbereichs 4 und des Gewindeganges 50 und damit des Gewindelochs 5 ist mit D bezeichnet. Die radiale Differenz zwischen der äußersten Abmessung der Gewindeerzeugungszähne und der äußersten radialen Abmessung der Kernlochschneiden entspricht insbesondere der Profiltiefe des Gewindeprofils des zu erzeugenden Innengewindes oder, mit anderen Worten, der Differenz zwischen dem Radius D/2 des Gewindegrundes und dem Radius des Kernloches d/2.

Das Gewindeprofil des Innengewindes, also der Längsschnitt durch den Gewindegang 50 in einer die Werkzeugachse A enthaltenden Schnittebene, wird erzeugt durch das aus den einzelnen Wirkprofilen der Gewindeerzeugungszähne, z.B. 41 und 42, bei vollständigem Durchlauf durch das Werkstück zusammengesetzte oder überlagerte Gewindewirkprofil.

Die in axialer Projektion auf die Werkzeugachse A gemessene Gewindeprofilbreite des Gewindewirkprofils ist mit c bezeichnet und entspricht dem maximalen Abstand der Gewindeprofilflanken. Der in axialer Projektion auf die Werkzeugachse A gemessene axiale Abstand zwischen zwei aufeinanderfolgenden Gewindeprofilen des Gewindeganges 50 ist die Gewindelücke b. Die Summe aus der Gewindelücke b und der Gewindebreite c entspricht hier der Gewindesteigung P.

Während einer ersten Arbeitsphase oder Gewindeerzeugungsphase wird mit dem Werkzeug 2 das Kernloch mittels des Bohrbereichs 3 erzeugt und gleich axial dahinter und zumindest teilweise gleichzeitig der Gewindegang 50 in der Kernlochwandung mittels des Gewindeerzeugungsbereichs 4 erzeugt. In dieser ersten Arbeitsphase wird die axiale Vorschubgeschwindigkeit v entlang der Werkzeugachse A auf die Drehgeschwindigkeit für die Drehbewegung um die Werkzeugachse A so abgestimmt und synchronisiert, dass bei einer vollen Umdrehung der axiale Vorschub der Gewindesteigung P entspricht. Die axiale Eindringtiefe (oder: der axiale Vorschub) T in Richtung der Werkzeugachse A gemessen von der Werkstückoberfläche 60 in dieser ersten Arbeitsphase entspricht der Gewindetiefe $T_G$.

Nun wird in einer an die erste Arbeitsphase unmittelbar anschließenden zweiten Arbeitsphase in einem Abbremsvorgang (oder: in einer Abbremsbewegung) das Werkzeug 2 in einem Drehwinkelintervall derart abgebremst, dass der axiale Vorschub V bei einem Drehwinkel von 360°, d.h. bei einer vollen Umdrehung, des Werkzeugs 2 kleiner als die Gewindesteigung P ist und bis auf Null abnimmt. In der Regel beginnt der Abbremsvorgang oder die zweite Arbeitsphase bei einem auf einen Drehwinkel von 360° bezogenen axialen Vorschub, der der Gewindesteigung P der ersten Arbeitsphase entspricht, also V = P, und reduziert dann den axialen Vorschub pro 360° Drehwinkel auf Werte unterhalb der Gewindesteigung P, also V < P. Der Abbremsvorgang ist als Abbremsung von der anfänglichen Gewindesteigung V = P bis auf Null am Ende oder an einem Umkehrpunkt, also V = 0, zu verstehen und muss nicht über das gesamte Drehwinkelintervall eine Verringerung des axialen Vorschubs V abhängig vom Drehwinkel (Abbremsbeschleunigung) beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt.

Dieser Abbremsvorgang erfolgt in einer bevorzugten Ausführungsform in definierten Teilschritten wie nachfolgend noch näher erläutert wird.

Diese Abbremsbewegung in der zweiten Arbeitsphase führt dazu, dass der Gewindeerzeugungsbereich 4 nun - in eigentlich atypischer oder funktionsfremder Weise - wenigstens eine umlaufende Nut oder Umlaufnut oder Umfangsnut in der Kernlochwandung erzeugt. Der Vorgang in der zweiten Arbeitsphase kann deshalb außer als Abbremsvorgang auch als Umfangsnuterzeugung oder Umlaufnuterzeugung oder Freistichbewegung, bei rein schneidendem Werkzeug auch als Freischneidbewegung bezeichnet werden.

In FIG 1 sind die Gewindeerzeugungszähne 41 und 42 mit gleichem Außenradius D/2 und vorzugsweise gleichem Gewindewirkprofil, das schon dem Endprofil des Gewindeganges 50 entspricht, dargestellt. Die Gewindeerzeugungszähne 41 und 42 des Werkzeugs gemäß FIG 1 erzeugen in der zweiten Arbeitsphase eine Umfangsnut 53 mit dem durchgehenden Außendurchmesser D und der axialen Länge a, die sich aus dem gesamten axialen Vorschub der Abbremsbewegung in der zweiten Arbeitsphase bis zum Umkehrpunkt ergibt, erzeugen.

In FIG 2 sind dagegen zwei Umfangsnuten 51 und 52 dargestellt, wobei die erste Umfangsnut 51 einen zwischen dem Kernlochdurchmesser d und dem Gewindeaußendurchmesser D liegenden Außendurchmesser d' aufweist und die zweite Umfangsnut 52 einen Außendurchmesser hat, der dem Gewindeaußendurchmesser D entspricht.

Solche Umfangsnuten 51 und 52 können während der zweiten Arbeitsphase beispielsweise mit zwei um P/2 versetzten Gewindeerzeugungszähnen 41 und 42 wie beispielsweise in FIG 1 dargestellt, erzeugt werden, die wie folgt modifiziert werden: Es kann der erste Gewindeerzeugungszahn 41 in FIG 1 nur einen Außenradius d'/2 aufweisen und somit ein Anschnitt- oder Anfurchzahn sein, der den Gewindegang 50 nicht bis zur vollen Profiltiefe oder bis zum finalen Gewindegrund erzeugt, während der der zweite Gewindeerzeugungszahn 42 bereits den vollen Außendurchmeesser D aufweist, also die volle Gewindeprofiltiefe erzeugt (Vollzahn).

Die Umfangsnut setzt sich somit aus zwei Teilnuten zusammen, nämlich der ersten im Durchmesser kleineren Umfangsnut 51, die vom ersten Gewindeerzeugungszahn 41 erzeugt wird, und der mit dem vollen Durchmesser D ausgebildeten zweiten Umfangsnut 52, die vom zweiten Gewindeerzeugungszahn 42 erzeugt wird.

Diese Ausführungen sind nur beispielhaft. Bei einer nicht dargestellten anderen Anzahl oder Verteilung von Gewindeerzeugungszähnen ergeben sich entsprechend andere Umfangsnuten.

Wenn man die Umfangsnut(en), beispielsweise die Umfangsnuten 51 und 52 in FIG 2 oder die Umfangsnut 53 in FIG 1, in axialer Richtung kontinuierlich oder ununterbrochen erzeugen will sind, wird der axiale Vorschub V bei voller Umdrehung oder 360° insbesondere um mindestens b/n gegenüber P reduziert, um die Gewindelücke b zu schließen oder nicht mehr zu erzeugen, wobei n die Zahl der Gewinderzeugungszähne im Gewindeerzeugungsbereich 4 ist.

Man könnte die Freistichbewegung oder Abbremsbewegung auch so ausführen, dass die Außenbreite am Gewindeprofil, insbesondere die Flanken, in der Umfangsnut nicht mehr sichtbar sind oder verschwinden und/oder die Umfangsnut nur noch eine zylindrische Gestalt hat. Damit könnte die Durchschraubbarkeit des erzeugten Werkstückgewindes verbessert oder ermöglicht werden.

In den in FIG 1 und FIG 2 dargestellten Ausführungsbeispielen ist n = 2 mit den beiden Gewindeerzeugungszähne 41 und 42 bzw. Umlaufnuten 51 und 52, so dass also der axiale Vorschub V beim Abbremsvorgang vorzugsweise kleiner als P - b/2 eingestellt wird. Das Gewindewirkprofil der Gewindeerzeugungszähne, hier 41 und 42, erzeugt dann in der Überlagerung bei der Bewegung kein Gewinde mehr, sondern wenigstens eine durchgehende Umfangsnut, die durchgehend den Außendurchmesser hat, der dem des zugehörigen Gewindeerzeugungszahnes auf seiner jeweiligen Bahn bei der Abbremsbewegung in der zweiten Arbeitsphase entspricht.

Die Gesamttiefe oder Lochtiefe oder gesamte axiale Abmessung des Gewindeloches 5 nach der zweiten Arbeitsphase ist mit $T_L$ bezeichnet und entspricht im Wesentlichen der Summe $T_G$ + a aus der Gewindetiefe $T_G$ als axialem Vorschub aus der ersten Arbeitsphase und der axialen Nutlänge a als axialem Vorschub aus der zweiten Arbeitsphase.

Wenn die Gesamttiefe oder Lochtiefe $T_L$ des Gewindeloches 5 erreicht ist, kommt das Werkzeug 2 zum Stillstand und erreicht einen Umkehrpunkt.

Es wird nun am Umkehrpunkt unmittelbar eine Reversier- oder Rückwärtsbewegung RB eingeleitet, mit der das Werkzeug 2 zunächst in einer ersten Reversierphase durch die Umlaufnut(en) 51, 52, 53 bis zum Gewindegang 50 zurückbewegt wird und dann in einer zweiten Reversierphase durch das Gewinde bzw. den Gewindegang 50 nach außen aus dem Gewindeloch 5 und dann dem Werkstück 6 herausbewegt wird oder ausgefädelt wird.

Zu einer bevorzugten Ausbildung der ersten Reversierphase wird später noch mehr ausgeführt.

In der zweiten Reversierphase der Rückwärtsbewegung RB werden wieder der axiale Vorschub und die Drehbewegung des Werkzeugs 2 aufeinander gemäß der Gewindesteigung P synchronisiert, um das Gewinde nicht zu beschädigen, nur dass jeweils die Richtung des axialen Vorschubs in der Pfeilrichtung der Rückwärtsbewegung RB gegenüber der Pfeilrichtung der Vorwärts- oder Arbeitsbewegung VB vertauscht oder entgegengesetzt ist und die Drehrichtung der Drehbewegung ebenfalls umgekehrt wird, also statt dem Vorwärtsdrehsinn VD nun der Rückwärtsdrehsinn RD eingestellt wird.

Die Gewindeachse oder Mittelachse des Gewindes mit dem Gewindegang 50 ist mit M bezeichnet und fällt während der gesamten Arbeitsbewegung, also sowohl in der ersten Arbeitsphase als auch in der zweiten Arbeitsphase, und auch während der Reversierbewegung, also sowohl in der ersten Reversierphase als auch in der zweiten Reversierphase, mit der Werkzeugachse A des Werkzeugs 2 zusammen oder ist koaxial zu dieser.

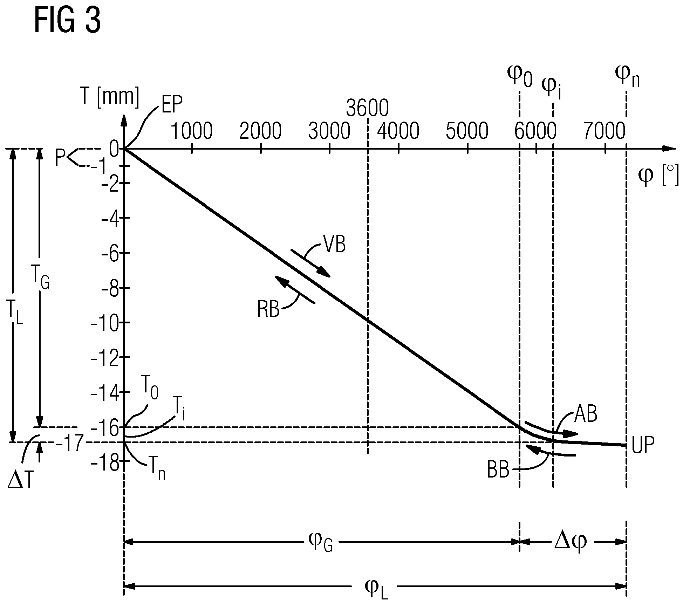

Die FIG 3 bis 5 zeigen anhand jeweils eines Diagramms ein Ausführungsbeispiel eines Prozesses (oder: Verfahrens) oder eines Steuerungsablaufs, der sowohl zur Erzeugung eines Gewindes in einem vorab erzeugten Kernloch im Werkstück oder zur Erzeugung eines Gewindeloches im Werkstück, also im Vollmaterial des Werkstücks ohne vorherige Kernbohrung, beispielsweise eines Gewindeloches gemäß FIG 2, verwendet werden kann.

Zur Erzeugung eines Gewindes in einem vorerzeugten Kernloch kann ein Gewindebohrer oder Gewindefurcher gemäß dem eingangs erwähnten Stand der Technik verwendet werden.

Zur Erzeugung eines Gewindeloches kann ein kombiniertes Bohr- und Gewindebohr-werkzeug, wie aus der eingangs erwähnten DE 10 2016 008 478 A1 bekannt, oder ein kombiniertes Bohr- und Gewindefurchwerkzeug, wie aus der eingangs erwähnten DE 10 2005 022 503 A1 bekannt, oder auch ein Werkzeug gemäß der Erfindung, beispielsweise gemäß FIG 1, verwendet werden.

In dem Diagramm der FIG 3 ist auf der vertikalen Achse oder Ordinate die Eindringtiefe (oder: vertikale oder axiale Koordinate) T als in axialer Richtung, d.h. entlang der Werkzeugachse A und der zur Werkzeugachse A koaxialen Gewindemittelachse M, verlaufende und gemessene Koordinate für den axialen Vorschub in mm aufgetragen. Die Werte für die Eindringtiefe T nehmen von dem ganz oben dargestellten Wert T = 0 mm, der insbesondere der axialen Eintrittsposition an der Werkstückoberfläche 60 des Werkstücks 6 entspricht (wie man in FIG 1 erkennen kann) nach unten ab, sind also als negative Werte nach unten aufgetragen. Der Zahlenbereich geht in dem Beispiel der FIG 1 bespielhaft von T = 0 mm bis T = - 18 mm.

Auf der horizontalen Achse oder Abszisse ist der (aufsummierte) Drehwinkel φ der Drehbewegung des Werkzeugs 2 um dessen Werkzeugachse A in Grad [°] aufgetragen. Der Drehwinkel φ geht aus von dem Eintrittsdrehwinkel oder anfänglichen Drehwinkel φ = 0° bei der axialen Eintrittsposition T = 0 mm bei einem Eintrittspunkt EP = (0, 0) und nimmt nach rechts zu positiven Werten hin bis zu dem auf der Abszisse als letzten Wert eingetragenen Wert von φ = 8000° zu. Der Drehwinkel φ nimmt bei der Vorwärtsdrehbewegung VD oder in einem Vorwärtsdrehsinn hin zu positiven Werten zu und bei der Rückwärtsdrehbewegung RD oder einem dem Vorwärtsdrehsinn entgegengesetzten Rückwärtsdrehsinn ab. Dabei entspricht t 360° einer vollständigen Umdrehung des Werkzeugs 2 um seine Werkzeugachse A.

In dem Graphen der Funktion T (φ) gemäß FIG 3 ist, ohne Beschränkung der Allgemeinheit, insbesondere die Erzeugung eines Gewindeloches, also ein vollständiger Gewindelocherzeugungszyklus gemäß der Erfindung in einem Ausführungsbeispiel veranschaulicht, insbesondere ein Gewindelocherzeugungszyklus mit erster Arbeitsphase, zweiter Arbeitsphase, Umkehrpunkt, erster Reversierphase und zweiter Reversierphase, beispielsweise wie anhand FIG 1 und 2 bereits beschrieben.

Die Funktion T (cp) beschreibt die Abhängigkeit oder Synchronisierung der axialen Vorschubbewegung in der axialen Koordinate (oder: Tiefe im Werkstück 6) T von oder mit der Drehbewegung in der Koordinate φ und wird typischerweise in einer Steuerung wie einer numerischen Steuerung oder CC-Steuerung der Werkzeugmaschine, insbesondere in Form einer vorab ermittelten und gespeicherten Wertetabelle oder auch als Funktion zur jeweiligen Berechnung, hinterlegt. Nach der in der CNC-Technik üblichen Nomenklatur entspräche die T-Koordinate der Z-Achse (Spindelachse), wobei die positive Richtung konventionell vom Werkstück zum Werkzeug verläuft, wie beispielsweise in FIG 1 bei der Koordinate T eingezeichnet.

Der Graph (φ; T (φ)) der Funktion T (φ) verläuft gemäß FIG 3 zunächst einen für einen Gewindebohrer oder Gewindefurcher typischen und der Erzeugung des Gewindeganges entsprechenden linearen Abschnitt, d.h. in Form einer Geraden, von dem Ausgangspunkt $\varphi$ = 0° und T = 0 mm bis zu einem Gewindeendpunkt bei $\varphi_0$ und $T(\varphi_0)$ = - 16 mm, bei dem der Gewindegang oder die eigentliche Gewindeerzeugung endet.

Es gilt also die Darstellung der linearen Funktion T (cp) in diesem Abschnitt von $\varphi$ = 0 bis $\varphi$ = $\varphi_0$ und T = 0 bis T = - 16 mm:

$$|T(\varphi)| = (P / 360°) \, \varphi$$

mit der Gewindesteigung P.

Die Steigung oder Ableitung dT/d(p in diesem Bereich ist konstant und entspricht dem Betrage nach P / 360°. Das bedeutet also für die Gewindesteigung

$$P = 360° \; | \, dT/d\varphi \, |$$

Da bei dem gewählten Beispiel der FIG 3 der zum eingetragenen Winkelwert $\varphi$ = 3600° entsprechende Wert für die Gewindetiefe T = - 10 mm ist, ist die Steigung der Geraden - 1 mm / 360° und damit die Gewindesteigung P = 1 mm.

Aufgrund des zur Drehung synchronisierten axialen Vorschubs entlang der Eindringtiefe T bzw. Gewindemittelachse M sind bei einer vollständigen Umdrehung um 360° alle Komponenten des Werkzeugs 2 um die Gewindesteigung P weitergewandert.

Der lineare Abschnitt der Funktion T ($\varphi$) entspricht der üblichen synchronisierten Gewindebohreroder Gewindefurcher-Kinematik und kann in einer CNC-Steuerung beispielsweise als schon fest programmierte Wegbedingung (Adressbuchstabe G oder G-Funktion) hinterlegt sein, z.B. als G33, insbesondere G331 und G332, wobei die Gewindesteigung P als Interpolationsparameter parallel zur Z-Achse eingegeben wird, typischerweise unter dem Adressbuchstaben K in der CNC-Nomenklatur.

In diesem linearen Abschnitt erfolgt der Gewindeerzeugungsprozess, insbesondere zur Erzeugung des Gewindeganges 50 in der ersten Arbeitsphase gemäß FIG 1 und 2, und wird ein Gewinde der Gewindetiefe $T_G$ als Intervalllänge der Eindringtiefe T, insbesondere von T = 0 bis $T_0$, über die Intervalllänge oder den Drehwinkelbereich $\varphi_G$ des Drehwinkels $\varphi$, insbesondere von $\varphi$ = 0° bis $\varphi$ = $\varphi_0$ erzeugt. Im Beispiel der FIG 3 findet der Gewindeerzeugungsprozess (erste Arbeitsphase) von $\varphi$ = 0° bis $\varphi$ = $\varphi_0$ und von der entsprechenden Eindringtiefe T = 0 mm bis T = - 16 mm statt.

Die Steigung der Geraden in FIG 3 zwischen $\varphi$ = 0 und $\varphi$ = $\varphi_0$ entspricht der axialen Vorschubgeschwindigkeit des Werkzeugs 2, die gemäß der Gewindesteigung P auf den Drehwinkel $\varphi$ synchronisiert ist.

Die zeitliche Abhängigkeit des Drehwinkels $\varphi(t)$ als Funktion der Zeit t und damit Eindringtiefe T(t) als Funktion der Zeit t kann während des Gewindeerzeugungsprozesses prinzipiell - auch in weiten Bereichen - variiert werden. Vorzugsweise sind aber die Drehgeschwindigkeit dcp/dt und die axiale Vorschubgeschwindigkeit dT/dt während der Arbeitsbewegung VB jeweils konstant. Wenn die Drehgeschwindigkeit dcp/dt verändert wird, muss also entsprechend auch die axiale Vorschubgeschwindigkeit dT/dt, also die Ableitung der Eindringtiefe T nach der Zeit t entsprechend angepasst werden, damit die Synchronisierung des axialen Vorschubs Z gemäß der Beziehung Z = P/360° erhalten bleibt.

Dies ist die bekannte und in Werkzeugmaschinensteuerungen oder CNC-Steuerungen implementierte Kinematik bei der Gewindeerzeugung mittels eines axial arbeitenden Gewindewerkzeugs wie eines Gewindebohrers oder Gewindeformers.

Im Anschluss an den Gewindeerzeugungsprozess (erste Arbeitsphase) erfolgt nun, insbesondere in der zweiten Arbeitsphase, ein Abbremsvorgang oder eine Abbremsbewegung AB in einem Drehwinkelbereich $\Delta\varphi$ zwischen den Drehwinkelwerten $\varphi_0$ und $\varphi_n$ und einem zugehörigen Eindringtiefenbereich $\Delta T$, der im Beispiel der FIG 3 von $T(\varphi_0)$ = - 16 mm bis $T(\varphi_n)$ = - 17 mm reicht. Am Ende der Abbremsbewegung AB ist ein Umkehrpunkt UP erreicht, bei dem das Werkzeug 2 sowohl hinsichtlich der Drehbewegung als auch hinsichtlich der axialen Vorschubbewegung kurzzeitig zu Stillstand kommt. Beim Umkehrpunkt UP ist der maximale Drehwinkelbereich $\varphi_L$ für die Erzeugung des Gewindeloches erreicht, wobei $\varphi_L$ = $\varphi_G$ + $\Delta\varphi$, und die maximale Eindringtiefe $T_L$ für das Gewindeloch, wobei $T_L$ = $T_G$ + $\Delta T$.

Während des Abbremsvorganges oder der Abbremsbewegung AB wird die axiale Vorschubgeschwindigkeit abhängig vom Drehwinkel, die der Steigung des dargestellten Graphen für die Funktion T($\varphi$) entspricht, verringert gemäß einer Abhängigkeit oder Funktion, die vorzugsweise streng monoton (Steigung immer fallend) oder monoton (Steigung fallend und ggf. abschnittsweise auch Null) ist, jedoch ggf. auch in Teilabschnitten auch wieder leicht ansteigen kann. Vorzugsweise wird die Steigung in einer vorgegebenen Anzahl n von einzelnen definierten programmierten oder eingespeicherten Teilschritten oder Abbremsschritten $S_i$ sukzessive verringert, wobei die Gesamtzahl oder Anzahl n eine natürliche Zahl mit n > 1 ist, im Allgemeinen 200 > n > 2, insbesondere 20 > n > 5 gewählt ist und wobei i der Zählindex für den Abbremsschritt $S_i$ ist und zwischen 1 und n liegt, also $1 \leq i \leq n$ gilt.

In jedem Teilschritt oder Abbremsschritt $S_i$ ist eine der Steuerung eines Gewindeprozesses entsprechende Synchronisierung von axialem Vorschub T (oder von der Vorschubgeschwindigkeit dT/dt) und dem Drehwinkel $\varphi$ (oder der Drehgeschwindigkeit d(p/dt) eingestellt oder programmiert, indem jedem Abbremsschritt $S_i$ mit $1 \leq i \leq n$ eine zugehörige vorgegebene Funktion $T_i(\varphi)$ mit einem zugehörigen Werteintervall $[T_{i-1}, T_i]$ über dem zugehörigen Drehwinkelintervall $[\varphi_{i-1}, \varphi_i]$ zugeordnet oder programmiert wird.

Die Funktion $T_i(\varphi)$ ist vorzugsweise linear, der Graph also (idealisiert) eine Gerade.

Dabei nimmt die programmierte oder eingespeicherte Steigung von jedem Abbremsschritt $S_i$ zum nächsten Abbremsschritt $S_{i+1}$ stufenweise oder sukzessive ab, d.h. $| dT_i/d\varphi | > | dT_{i+1}/d\varphi |$. Die Steigung entspricht jeweils einem Steigungsparameter.

In einer vorteilhaften Ausführungsform wird dieser Steigungsparameter als Gewindesteigung in der CNC-Steuerung programmiert, also insbesondere als Interpolationsparameter entlang der z-Achse oder der Gewindeachse M in einer G33, insbesondere G331 und G332, Wegbedingung. Dadurch können die bereits in der Steuerprogrammierung vorgegebenen Wegbedingungen oder G-Funktionen genutzt werden und es muss nur der Eingabeparameter der Gewindesteigung sukzessive geändert oder neu programmiert werden.

Somit wird also in jedem Abbremsschritt $S_i$ der zugehörige Steigungsparameter

$$P_i = | dT_i/d\varphi |$$

programmiert oder eingestellt, wobei

$$P_{i+1} < P_i$$

für alle i mit $1 \le i \le n$. Ferner ist

$$P_i < P$$

d.h. die Steigung in der zweiten Arbeitsphase oder während der Abbremsbewegung AB kleiner ist als die Gewindesteigung P während der ersten Arbeitsphase. Insbesondere aber ohne Beschränkung der Allgemeinheit kann $P_i = P (n - i)/n$ sein. Dies gilt beispielsweise für $P_1$ bis $P_{n-1}$, wobei dann für $P_n$ ein Wert kleiner als $P_{n-1}$ gewählt wird, z.B. $P_{n-1}/2$.

Insbesondere ist $P_1$ möglichst nahe zu P gewählt. Ferner ist insbesondere $P_n > 0$ und möglichst nahe zu 0 gewählt.

Die Werte von $P_i$ können beispielsweise so gewählt werden, dass aus der Gewindesteigungsbewegung heraus eine stetig fortgeführte Bewegung in den Freischneidbereich möglich ist. Es soll insbesondere möglichst die Geschwindigkeit des Werkzeugs beibehalten werden. Daraus folgend können beispielsweise verschiedene Bedingungen formuliert werden, die in Näherungsfunktionen abgebildet werden können.

Dabei gilt in jedem Abbremsschritt $S_i$ für alle i mit $1 \le i \le n$ die Beziehung:

$$T(\varphi) = T_{i-1} - (P_i / 360°) (\varphi - \varphi_{i-1})$$

für $\varphi \in [\varphi_{i-1}, \varphi_i]$ mit den Randbedingungen $T(\varphi_{i-1}) = T_{i-1}$ und $T(\varphi_i) = T_i$.

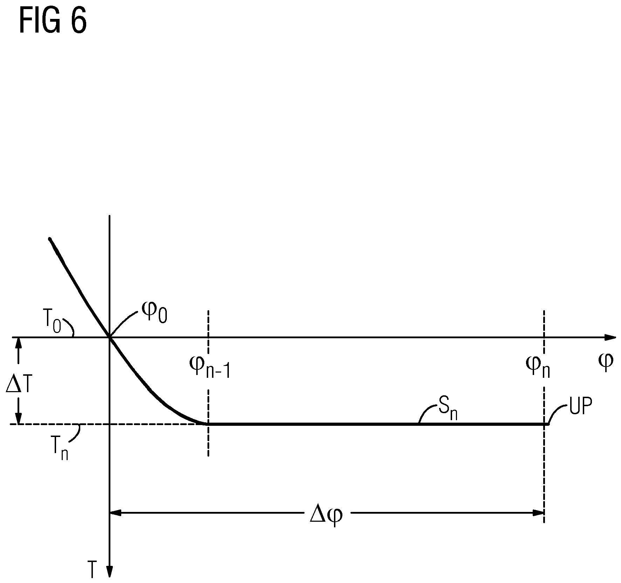

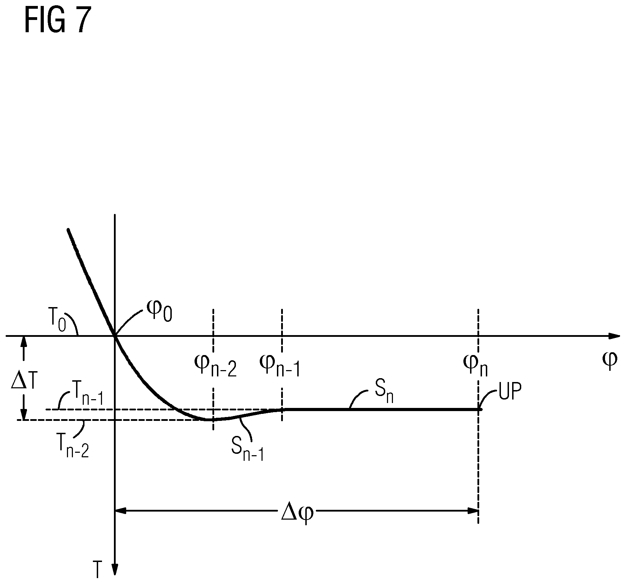

Der Drehwinkelbereich $\Delta\varphi$ für die Abbremsbewegung AB in der zweiten Arbeitsphase ist im Allgemeinen kleiner gewählt als der Drehwinkelbereich $\varphi_G$ für die Gewindeerzeugung in der ersten Arbeitsphase, insbesondere ist $\Delta\varphi < 0,5 \varphi_G$ und vorzugsweise $\Delta\varphi < 0,2 \varphi_G$ gewählt. Das kann insbesondere davon abhängen, wie groß die nutzbare Gewindelänge ist. Ein anderer Einflussfaktor ist die beabsichtigte Funktion im Freistich. Falls man neben dem reinen Abbremsen zusätzlich noch weitere Drehungen zum Freischneiden der Späne machen möchte, können wieder Umdrehungen hinzukommen (siehe weiter unten zu FIG 6 und 7)

Der Eindringtiefenbereich (oder: die maximale Eindringtiefe) $\Delta T$ für die Abbremsbewegung AB in der zweiten Arbeitsphase ist im Allgemeinen kleiner gewählt als der Eindringtiefenbereich oder die Gewindelänge $T_G$ für die Gewindeerzeugung in der ersten Arbeitsphase, insbesondere ist $\Delta T < 0,5 T_G$, vorzugsweise $\Delta T < 0,2 T_G$ gewählt.

Der Eindringtiefenbereich $\Delta T$ für die Abbremsbewegung AB kann insbesondere gleich P gewählt werden. Ebenso ist ein Eindringtiefenbereich $\Delta T$ kleiner P möglich, um die Gewindelochtiefe kleiner zu halten, z.B. 0,5 P oder auch 0,25 P. Aus Gründen der Zerspanung kann es eventuell auch günstig sein, größere Freistichhöhen oder einen größeren Eindringtiefenbereich $\Delta T$ zu wählen, insbesondere bis zu 2 P und in Ausnahmefällen auch größer.

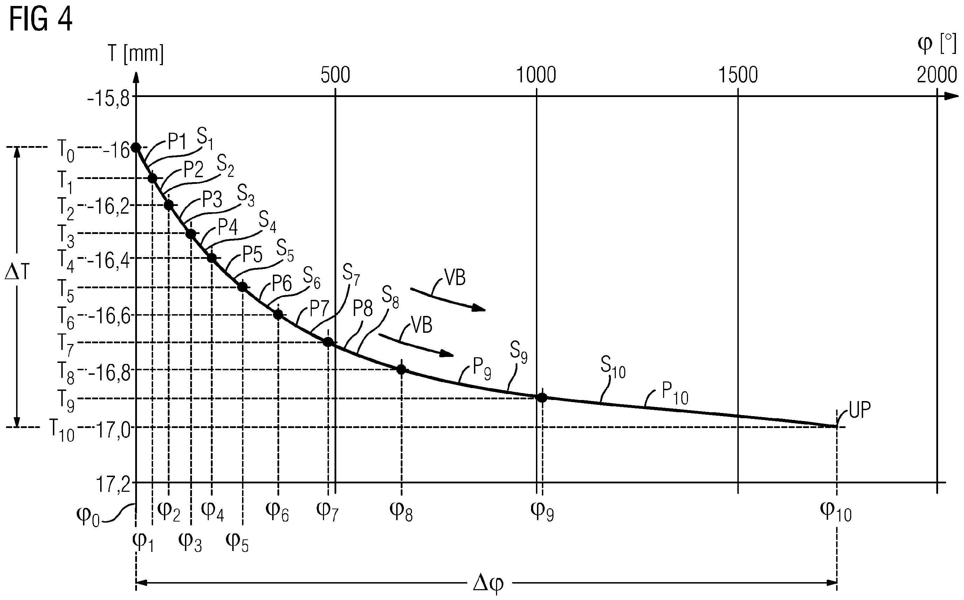

Die FIG 4 zeigt nun ein Ausführungsbeispiel einer Abbremsbewegung AB in einer vergrößerten Ansicht des rechten unteren Bereichs des Diagramms der FIG 3 in einem Drehwinkelbereich $\Delta\varphi$ und einem zugehörigen Eindringtiefenbereich $\Delta T$.

In FIG 4 ist beispielhaft und ohne Beschränkung der Allgemeinheit n = 10 gewählt und es sind somit zehn Abbremsschritte $S_1$ bis $S_{10}$ mit den zugehörigen Steigungsparametern $P_1$ bis $P_{10}$ eingezeichnet.

Der Drehwinkelbereich $\Delta\varphi$ ist entsprechend aufgeteilt in die n = 10 Drehwinkelintervalle $[\varphi_0, \varphi_1]$, $[\varphi_1, \varphi_2]$,..., $[\varphi_{i-1}, \varphi_i]$, $[\varphi_i, \varphi_{i+1}]$,... $[\varphi_9, \varphi_{10}]$ und diesen Intervallen zugehörig sind die entsprechenden Eindringtiefenintervalle $[T_0, T_1]$, $[T_1, T_2]$, ..., $[T_{i-1}, T_i]$, $[T_i, T_{i+1}]$,..., $[T_9, T_{10}]$, in die der Eindringtiefenbereich $\Delta T$ aufgeteilt ist, der im Beispiel der FIG 4 von $T(\varphi_0)$ = -16 mm bis $T(\varphi_{10})$ = - 17 mm reicht und/oder der Gewindesteigung - P = - 1 mm entspricht. Jedem Intervall entspricht ein Teilschritt $S_i$.

In FIG 4 ist, anders als in FIG 3, der Differenzdrehwinkel ausgehend von $\varphi_0$ aufgezeichnet. Wenn man in FIG 4 die gleichen Werte auf der Drehwinkelachse für $\varphi$ wie in FIG 3 eintragen will, so sind alle Werte auf der horizontalen Achse mit dem Wert von $\varphi_0$, der in FIG 3 beispielsweise 5800° beträgt, zu addieren. Die Abbremsbewegung AB beginnt bei dem Drehwinkelwert $\varphi_0$ und dem zugehörigen Eindringtiefenwert $T_0$ und endet bei dem Enddrehwinkelwert $\varphi_{10}$ und dem zugehörigen Eindringtiefenwert $T_{10}$.

Es wird nun jedem dieser Intervalle jedes Abbremsschrittes $S_i$ ein zugehöriger Steigungsparameter $P_i$, insbesondere als Gewindesteigung oder Interpolationsparameter der CNC-Steuerung, zugeordnet, also den beiden Intervallen $[\varphi_0, \varphi_1]$ und $[T_0, T_1]$ die Steigung $P_1$, dem Intervallpaar $[\varphi_1, \varphi_2]$ und $[T_1, T_2]$ die Steigung $P_2$ und so weiter bis zur Steigung $P_{10}$ für das letzte Intervallpaar $[\varphi_9, \varphi_{10}]$ und $[T_9, T_{10}]$.

Die Steigungswerte $P_1$ bis $P_{10}$ werden so gewählt, dass $P_{i+1} < P_i$ ist für i = 1 bis i = 10 in FIG 4 oder n in FIG 3. In jedem Teilabschnitt oder Abbremsschritt $S_i$ bleibt die Gewindesteigung $P_1$ bis $P_{10}$ konstant, so dass sich im Wesentlichen gerade Teilabschnitte des Graphen der Funktion $T(\varphi)$ ergeben, in denen eine synchronisierte "Gewindebewegung" stattfindet, also die axiale Vorschubgeschwindigkeit dem Quotienten aus $P_i/360°$ entspricht.

Im dargestellten Ausführungsbeispiel der FIG 4 wurden die Eindringtiefeintervalle in den Abbremsschritten $S_i$ für alle i mit $1 \le i \le n$ (hier z.B. n = 10) gleich groß gewählt, so dass die Länge der Intervalle $T_1 - T_0 = T_2 - T_1 = T_i - T_{i-1} = T_{i+1} - T_i = T_n - T_{n-1}$ gleich oder äquidistant gewählt ist, also

$$T_i - T_{i-1} = \Delta T / n$$

im dargestellten Ausführungsbeispiel der FIG 4 als - 1 mm/10 = - 0,1 mm gewählt ist.

Da der axiale Vorschub in jedem Teilabschnitt oder Teilintervall im Ausführungsbeispiel der FIG 4 konstant gewählt ist, da $T_{i+1} - T_i$ für alle i gleich oder äquidistant gewählt ist, ergeben sich bei geringer werdender Steigung $P_i$ und damit abnehmender axialer Vorschubgeschwindigkeit größer werdende Drehwinkelintervalle $\varphi_{i+1}, - \varphi_i$

$$\varphi_{i+1} - \varphi_i > \varphi_i - \varphi_{i-1}$$

in dem Drehwinkelbereich $\Delta\varphi$ in den Abbremsschritten $S_i$. D.h. der Drehwinkelabstand $\varphi_2 - \varphi_1$ ist kleiner als der Drehwinkelabstand $\varphi_3 - \varphi_2$ und der Drehwinkelabstand $\varphi_{i+1} - \varphi_i$ ist größer als der Winkelabstand $\varphi_i - \varphi_{i-1}$. Den größten Winkelabstand oder Winkelbereich deckt der letzte Teilabschnitt ab zwischen den Drehwinkelwerten $\varphi_{10} - \varphi_9$. Dies entspricht einem kontinuierlichen und in jedem Teilabschnitt oder Abbremsschritt $S_i$ verlangsamten Abbremsvorgang.

Während der Abbremsbewegung AB wird die zeitliche Abhängigkeit der Drehgeschwindigkeit dcp/dt und die axiale Vorschubgeschwindigkeit dT/dt so gewählt oder gesteuert oder programmiert, dass das Werkzeug 2 am Umkehrpunkt UP = $(\varphi_n, T_n)$ bzw. $(\varphi_{10}, T_{10})$ zur Ruhe kommt, also $d\varphi/dt = 0$ und $dT/dt = 0$ bei $\varphi = \varphi_n$ bzw. $T = T_n$ oder bei $\varphi = \varphi_{10}$ bzw. $T = T_{10}$.

Die Reduzierung der Drehgeschwindigkeit $d\varphi/dt$ und der axialen Vorschubgeschwindigkeit dT/dt auf 0 abhängig von der Zeit t kann z.B. kontinuierlich während der Abbremsbewegung AB erfolgen oder auch beispielsweise erst in dem letzten Abbremsschritt $S_n$ oder

$S_{10}$.

Die real nicht exakt linearen, sondern etwas abgerundeten Verläufe der Graphen in den Abbremsschritte $S_1$ bis $S_{10}$ der FIG 4 folgen physikalisch aus den Trägheiten des Antriebssystems, insbesondere der Steuerung, einschließlich deren Interpolationsroutinen zur Glättung der Übergänge, und der Maschinenantriebe und der Massenträgheit der bewegten Komponenten.

Idealisiert dargestellt oder in der Programmierung der Abbremsbewegung selbst hinterlegt ergibt sich jedoch die beschriebene Abfolge von linearen Funktionen oder aneinandergereihten linearen Abschnitten mit stufenweise abnehmender Steigung, d.h. stufenweise abnehmender jeweils konstanter Vorschubgeschwindigkeit, in den einzelnen Abbremsschritten $S_i$ beispielsweise $S_1$ bis $S_{10}$.

Vor Einleitung einer Ausfahr- oder Reversierbewegung kann man ggf. noch einen Zwischenschritt durchführen, etwa einen Säuberungsprozess. Hier kann man beispielsweise Spanwurzelreste durch weitere Drehung des Werkzeugs entfernen oder die Umfangsnut von Resten der Gewindespitzen säubern, um einen saubereren zylindrischen Bereich zu bekommen. Dann ließe sich eine Schraube noch besser eindrehen.

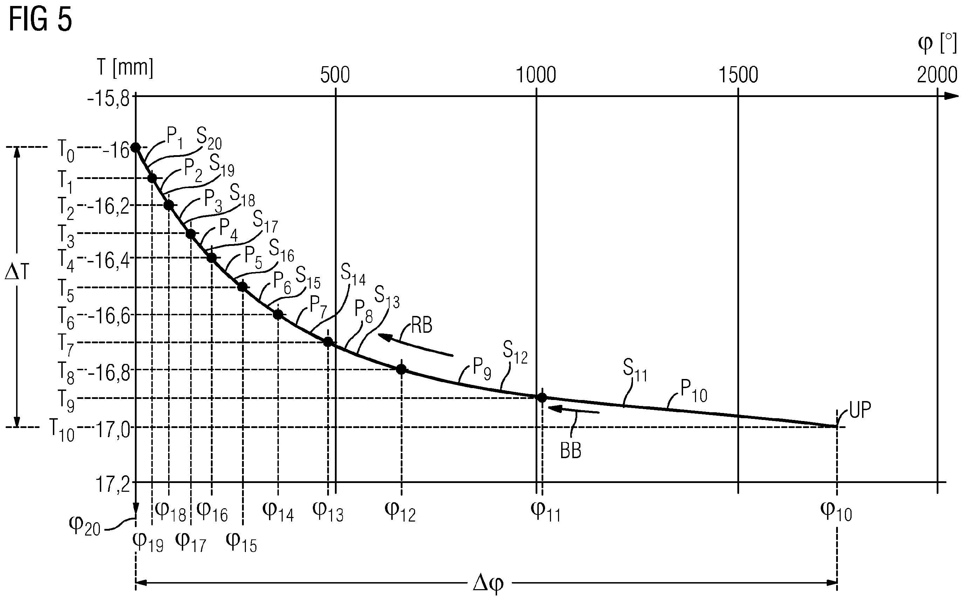

Nach Erreichen des Umkehrpunktes UP wird nun in einer Ausführungsform, wie insbesondere in FIG 3 und FIG 5 dargestellt, eine Reversierbewegung oder Rückwärtsbewegung RB eingeleitet, die zunächst in einer ersten Reversierphase eine Beschleunigungsbewegung BB umfasst bis zum Einfädeln in den Gewindegang 50 und in einer zweiten Reversierphase eine Rückwärtsbewegung RB, in der das Werkzeug 2 durch den Gewindegang 50 synchronisiert nach außen ausgefädelt wird.

In einer vorteilhaften Ausführungsform kann die Steuerkurve oder Funktion gemäß FIG 3 in umgekehrter Reihenfolge verwendet oder durchlaufen werden.

Die Drehbewegung wird für die Rückwärtsbewegung RB bzw. BB vom Vorwärtsdrehsinn VD in den Rückwärtsdrehsinn RD umgekehrt, d.h. der Drehwinkel $\varphi$ ausgehend von $\varphi = \varphi_n$ bzw. $\varphi = \varphi_{10}$ vorzugsweise beim Umkehrpunkt UP reduziert oder in negativer Richtung zurückgedreht, bis schließlich wieder der Ausgangswert $\varphi = 0$ erreicht ist und das Werkzeug 2 aus dem Werkstück 6 austritt. Die vorzugsweise unverändert übernommene Abhängigkeit oder Funktion $T(\varphi)$ führt nun dazu, dass die Eindringtiefe T mit abnehmendem Drehwinkel betragsmäßig kleiner wird, also von $T = T_n$ bzw. $T = T_{10}$ beim Umkehrpunkt UP wieder bis auf T = 0 beim Eintrittspunkt EP bei $\varphi = 0$ abnimmt, der somit also zugleich auch der Austrittspunkt ist. Insbesondere entspricht die erste Reversierphase der zweiten Arbeitsphase und die zweite Reversierphase der ersten Arbeitsphase.

Insbesondere kann auch eine Ausführungsform für die zweite Arbeitsphase wie z.B. gemäß FIG 4 in reversierter Reihenfolge für die erste Reversierphase verwendet werden.

In FIG 5 ist ein Ausführungsbeispiel gezeigt, wie in der ersten Reversierphase ausgehend vom Umkehrpunkt UP die gleiche Abhängigkeit oder Funktion $T(\varphi)$ in entgegengesetzter Reihenfolge für die Beschleunigungsbewegung BB in Umkehrung der Abbremsbewegung AB z.B. gemäß FIG 3 und 4 verwendet werden kann.

Es können aber auch andere Funktionen $T(\varphi)$ und Teilschritte als in FIG 5 verwendet werden, die vorzugsweise zu dem Punkt $(\varphi_0, T_0,)$ zurückführen, an dem auch die Abbremsbewegung AB begann bzw. die erste Arbeitsphase endete, so dass der richtige Einfädelpunkt für das Werkzeug für das Zurückfahren durch den Gewindegang 50 erreicht werden kann.

Vorzugsweise wird ausgehend von dem Endwinkelwert $\varphi_n$ oder $\varphi_{10}$ in umgekehrter Reihenfolge zunächst eine Beschleunigungsphase als erste Reversierphase mit einer Beschleunigungsbewegung BB durchgeführt mit den gleichen Inkrementalschritten. Diese Schritte sind nunmehr jedoch Beschleunigungsschritte $S_j$ mit $n+1 \leq j \leq 2\,n$ sind, in FIG 5 beginnend mit $S_{11}$ bis $S_{20}$ für $n = 10$.

Zugeordnet ist jedem dieser Beschleunigungsschritte $S_j$ ein zugehöriges Drehwinkelintervall $[\varphi_{10}, \varphi_{11}]$, $[\varphi_{11}, \varphi_{12}]$,..., $[\varphi_{j-1}, \varphi_j]$, $[\varphi_j, \varphi_{j+1}]$,... $[\varphi_{19}, \varphi_{20}]$, wobei $\varphi_j$; aus der ersten Reversierphase einfach $\varphi_i$ aus der zweiten Arbeitsphase entspricht, wenn man $i + j = n$ setzt. Die Steigungsparameter bleiben ebenfalls gleich, nur in umgekehrter Reihenfolge, also in FIG 5 werden sie von $P_{10}$ über $P_9$, $P_8$ bis zu $P_1$ für die Teilabschnitte der Steuerkurve gemäß FIG 4 von rechts nach links durchlaufen, bis der Tiefenwert $T_0$ erreicht wird. Gemäß FIG 5 wird der neue Winkelwert $\varphi_{11}$ zeitlich nach dem Winkelwert $\varphi_{10}$ angenommen und entspricht das Intervall $[\varphi_{10}, \varphi_{11}]$ dem Intervall $[T_{10}, T_9]$, mit der Gewindesteigung $P_{10}$ und das anschließende Winkelintervall $[\varphi_{11}, \varphi_{12}]$ dem Eindringtiefenintervall $[T_9, T_8]$ mit der entsprechenden Gewindesteigung $P_9$ usw. bis zum letzten Teilabschnitt von $[\varphi_{19}, \varphi_{20}]$ entsprechend $[T_1, T_0]$ mit der Gewindesteigung $P_1$.

Im Anschluss wird dann in umgekehrter Richtung der FIG 3 der lineare Abschnitt der Kurve von $\varphi_0$ bis $\varphi = 0$ entsprechend der Eindringtiefe T von $T_0$ bis zu T = 0 durchlaufen. Die der Steigung der Geraden in FIG 1 entsprechende axiale Vorschubgeschwindigkeit bei der Rückwärtsbewegung ist nun wieder P/360° mit umgekehrter Richtung. Dadurch wird das Werkzeug gerade umgekehrt durch das in der Vorwärtsbewegung erzeugte Gewinde geführt, ohne dass in dem Gewinde eine Beschädigung des erzeugten Gewindeganges stattfindet. Die Rückwärtsbewegung ist also genau so synchronisiert wie die Vorwärtsbewegung , nur mit umgekehrter Drehrichtung, so dass sich der Winkel $\varphi$ von dem Winkel $\varphi_n$ gerade wieder rückwärts in seinem Wert abnimmt bis auf $\varphi = 0$ und auch bei umgekehrter axialer Vorschubgeschwindigkeit nunmehr die Gewindetiefe von T = $T_0$ bis T = 0 mathematisch gesehen zunimmt.

Die gleiche Steuerkurve oder Funktion $T(\varphi)$ wie in der Vorwärtsbewegung VB in den beiden Arbeitsphasen auch in der Rückwärtsbewegung RB in den beiden Reversierphasen zu verwenden, hat einerseits den Vorteil, dass sich das Werkzeug 2 positionsgenau oder bewegungsgenau steuern lässt und sich insbesondere beim Einfädeln in den Gewindegang 50 in der richtigen Stellung befindet, und derart die Kräfte beim Reversieren sehr gering gehalten werden können und/oder eine hohe Rückfahr- oder Ausfahrgeschwindigkeit ermöglicht wird.

In einer Ausführungsform einer Umsetzung der beschriebenen Abhängigkeiten oder Funktionen für $T(\varphi)$ werden die Werte der Eindringtiefe T als gemessene oder von der Steuerung oder Programmierung vorgegebene Eingabeparameter verwendet und ergeben sich die zugehörigen Werte des Drehwinkels $\varphi$ aus der Abhängigkeit mittels der zugeordneten Steigungsparameter P und $P_i$.

Es kann also ein CNC-Programm für Gewindebohren oder Gewindefurchen gewählt werden, insbesondere mit einer G33, insbesondere G331 und G332, Wegbedingung mit einzugebender Gewindesteigung, und es kann nun eine Folge oder Menge von Werten für die Eindringtiefe angegeben werden, bei denen auf einen neuen Gewindesteigungsparameter umgeschaltet wird, wobei der Gewindesteigungsparameter bis zum nächsten Wert der Eindringtiefe beibehalten wird.

Eine Abfolge wäre z.B.

Arbeitsbewegung:

- Bei der Eindringtiefe T = 0 wähle den Gewindesteigungsparameter P und behalte diesen bis T = $T_0$ bei. Es wird eine Drehzahl oder Drehgeschwindigkeit eingestellt.
- Bei T = $T_0$ wechsle auf den Gewindesteigungsparameter $P_1$ und behalte diesen bis T = $T_1$ bei.
- Bei T = $T_i$ wechsle auf den Gewindesteigungsparameter $P_{i+1}$ und behalte diesen bis T = $T_{i+1}$ bei für alle i mit $1 \leq i \leq n$.
- Reduziere die Drehgeschwindigkeit oder Drehzahl bis auf 0 bei T = $T_n$.

und vorzugsweise für die

Reversierbewegung:

- Bei T = $T_n$ reversiere die axiale Vorschubbewegung und die Drehbewegung mit einer eingestellten Drehzahl oder Drehgeschwindigkeit und starte wieder in jeweils umgekehrter Richtung mit dem Gewindesteigungsparameter $P_n$ und behalte diesen bis T = $T_{n-1}$ bei.
- Bei T = $T_j$ wechsle auf den Gewindesteigungsparameter $P_j$ und behalte diesen bis T = $T_{j-1}$ bei für alle j als absteigender Index mit $1 \leq j \leq n-1$.
- Bei T = $T_0$ wähle den Gewindesteigungsparameter P und behalte diesen bis T = 0 bei.

Bei der beschriebenen linearen Interpolation, insbesondere gemäß FIG 4 und 5, werden die linearen Kurvenabschnitte oder Graphenabschnitte stetig aneinander angesetzt, d.h. die Anfangspunkte $(\varphi_i, T_i)$ jedes Intervalls entsprechen den Endpunkten des jeweils vorhergehenden Intervalls und beim ersten Intervall dem Endpunkt $(\varphi_0, T_0)$ des linearen Graphen der Gewindeerzeugung. Diese Verknüpfungspunkte werden auch als Stützstellen bezeichnet.

In nicht zur Erfindung gehörenden Ausführungsformen oder Interpolationen können anstelle linearer Abschnitte auch Kurvenabschnitte oder Graphenabschnitte gewählt werden, die stetig differenzierbar aneinandergesetzt (oder: verknüpft, miteinander verbunden) werden. Das bedeutet, dass nicht nur der Anfangspunkt jedes Intervalls mit dem Endpunkt des vorhergehenden Intervalls übereinstimmt, also ein stetiger Übergang an den Verknüpfungspunkten zwischen den Intervallen erfolgt, sondern zusätzlich die Graphenabschnitte oder deren Funktionen auch in diesen Verknüpfungspunkten differenzierbar sind und ihre Ableitung den gleichen Wert aufweisen.

Dadurch werden glatte oder stetig differenzierbare Übergänge zwischen den Graphen in den einzelnen Abbremsschritten oder Intervallen erreicht, was dem Bewegungsablauf förderlich ist. Auch der Übergang im Drehwinkel $\varphi_0$ von der Gewindeerzeugungsbewegung in der ersten Arbeitsphase zur Abbremsbewegung AB in der zweiten Arbeitsphase oder dann entsprechend vorzugsweise auch von der ersten Reversierphase zur zweiten Reversierphase ist vorzugsweise stetig differenzierbar oder mit derselben Steigung gewählt

Beispiele für Funktionen, die sich für einen solche stetig differenzierbare Interpolation eignen, sind Polynome höheren Grades als 1, insbesondere dritten Grades wie beispielsweise kubische Splines.

Hier kann eine Spline-Interpolation Anwendung finden. Durch eine Polynomfunktion 3. Grades als Splinefunktion

$$T(\varphi) = a_3\,\varphi^3 + a_2\,\varphi^2 + a_1\,\varphi + a_0$$

mit den bei Spline-Interpolation üblichen Randbedingungen lässt sich beispielsweise eine bis in die dritte Ableitung stetige Funktion erstellen.

Ferner kann in einer ebenfalls nicht zur Erfindung gehörenden Ausführungsform auch eine durchgehende, insbesondere streng monoton oder auch monoton fallende Funktion für den Abbremsvorgang oder zumindest einen überwiegenden Teil der Abbremsschritte $S_i$, beispielsweise eine Exponentialfunktion oder logarithmische Funktion, verwendet werden

In einer weiteren Ausführungsform einer Umsetzung der beschriebenen Abhängigkeiten oder Funktionen für $T(\varphi)$ werden die Werte des Drehwinkels $\varphi$ als

gemessene oder von der Steuerung oder Programmierung vorgegebene Eingabeparameter verwendet und ergeben sich die zugehörigen Werte der Eindringtiefe T aus der Abhängigkeit mittels der Steigungsparameter P und $P_i$.

Es kann in einer dritten Variante kann auch die Zeit als Eingabeparameter vorgegeben werden und ergeben sich die Werte des Drehwinkels $\varphi(t)$ und der Eindringtiefe $T(t)$ aus der Abhängigkeit von der Zeit t und der Abhängigkeit voneinander mittels der Steigungsparameter P und $P_i$.

Die Steuerung oder Synchronisierung kann in einer Ausführungsform in einem offenen Regel- oder Steuerkreis ohne Messung der Prozessgrößen Eindringtiefe und Drehwinkel erfolgen. Jedem Drehwinkelwert wird dabei mittels einer Wertetabelle oder durch Berechnung nach den hinterlegten Formeln ein Eindringtiefenwert zugeordnet und Drehantrieb und Axialantrieb werden entsprechend angesteuert.

In einer weiteren Ausführungsform kann auch eine Messung wenigstens einer der beiden Prozessgrößen Eindringtiefe und Drehwinkel erfolgen und können die Messwerte in die Steuerung rückgekoppelt werden, um eine Regelung gemäß der in FIG 1 bis 3 gezeigten Sollkurve in einem geschlossenen Regelkreis zu verwirklichen. Der Drehwinkel $\varphi$ wird in der Regel im Bereich des Antriebs, insbesondere der Antriebsspindel, mittels Drehwinkelsensoren oder Messung von mit dem Drehwinkel in eindeutiger Beziehung stehenden physikalischen Größen bestimmt. Es ist grundsätzlich aber auch möglich, den Drehwinkel direkt am Werkzeug 2 zu messen.

Die Eindringtiefe T kann durch axiale Positionssensoren gemessen werden und auch hier wieder im Allgemeinen am Antrieb, insbesondere der Antriebsspindel, oder auch in einer besonderen Ausführungsform am Werkzeug oder Werkstück selbst.

In weiteren Ausführungsformen kann in der zweiten Arbeitsphase zusätzlich ein Egalisierungsschritt oder konstanter Umlaufschritt stattfinden, währenddessen die Eindringtiefe $T(\varphi)$ = const. ist oder zumindest keine weitere Vorschubbewegung in Vorwärtsrichtung ausgeführt wird. Der Drehsinn der Drehbewegung bleibt während des Egalisierungsschrittes vorzugsweise gleich, wird also nicht reversiert.

Solche Ausführungsformen werden im Folgenden anhand von Ausführungsbeispielen und den FIG 6 und FIG 7 erläutert.

In einer Ausführungsform, beispielsweise gemäß FIG 6, wird bei Erreichen der maximalen Eindringtiefe $\Delta T$ bei einem Drehwinkel $\varphi_{n-1}$ der entsprechende Wert $T(\varphi)$ für den darauffolgenden Schritt $S_n$ bis zu dem Drehwinkel $\varphi_n$ beim Umkehrpunkt UP konstant gehalten, d.h. $T(\varphi_{n-1}) = T_{n-1} = T_n = T(\varphi_n)$.

In einer weiteren Ausführungsform, beispielsweise gemäß FIG 7, wird die maximale Eindringtiefe $\Delta T$ schon bei einem Drehwinkel $\varphi_{n-2}$ mit dem entsprechenden Wert $T(\varphi_{n-2}) = T_{n-2}$ erreicht. Nun wird der Wert $T(\varphi)$

für den darauffolgenden Schritt $S_{n-1}$ bis zu dem Drehwinkel $\varphi_{n-1}$ wieder reduziert, d.h. die axiale Vorschubrichtung umgekehrt, und die Eindringtiefe auf den Wert $T(\varphi_{n-1}) = T_{n-1} < T_{n-2}$ reduziert. In FIG 7 ist diese Reduzierung vergleichsweise klein.. Das Werkzeug läuft also mit einem leichten Reversiervorschub in der Umlaufnut. Diese definierte Bewegung in negativer T-Richtung vom Bohrungsgrund weg kann vorteilhaft sein, um den Freistich oder die Umfangsnut hinsichtlich Durchschraubbarkeit weiter zu verbessern. Ab dem Drehwinkel $\varphi_{n-1}$ wird auch in FIG 7 wieder der entsprechende Wert $T(\varphi)$ für den darauffolgenden Schritt $S_n$ bis zu dem Drehwinkel $\varphi_n$ beim Umkehrpunkt UP konstant gehalten, d.h. $T(\varphi_{n-1}) = T_{n-1} = T_n = T(\varphi_n)$. Es kann aber, vor allem bei schon (weitgehend) erzeugter Umfangsnut auch eine relativ große und/oder schnelle Rückholbewegung und/oder auch eine axiale Hin- und Herbewegung des Werkzeuges beim Egalisieren erfolgen, die auch einen axialen Vorschub pro 360° aufweisen kann, der sogar größer als die Gewindesteigung P ist.

Das Werkzeug und seine Gewindezähne drehen somit im Schritt $S_n$ auf einer Kreisbahn oder zylindrischen Bahn steigungslos bzw. sogar im Schritt $S_{n-1}$ mit einer positiven Steigung wieder um einen kleinen Betrag nach außen in dem Werkstück.

Diese Bewegung dient insbesondere dazu, die Umfangsnut zu egalisieren und die Oberfläche des Werkstücks zu säubern, die erzeugte Gewindebohrung möglichst vollständig von Spanmaterial zu evakuieren und ggf. auch Verspannungen zwischen Werkstück und Werkzeug abzubauen, die durch die Bearbeitungskräfte vorher aufgebaut wurden. Der Schritt $S_n$ als letzter Schritt der Abbremsbewegung AB in FIG 6 und 7 sowie auch der vorletzte Schritt $S_{n-1}$ gemäß FIG 7 kann somit auch als Egalisierungsschritt bezeichnet werden.

Der gesamte Drehwinkel $\varphi_n$ - $\varphi_{n-1}$ des Egalisierungsschritts $S_n$ in FIG 6 bzw. $\varphi_n$ - $\varphi_{n-2}$ des Egalisierungsschritts $S_n$ und $S_{n-1}$ in FIG 7 kann in weiten Grenzen frei gewählt werden, beispielsweise zwischen 180° und 2000°, und wird in der Regel größer gewählt werden, beispielsweise 3 mal größer, als der Drehwinkel $\varphi_{n-1}$ - $\varphi_0$ in FIG 6 bzw. $\varphi_{n-2}$ - $\varphi_0$ in FIG 7 des vorherigen monoton fallenden Abschnitts (Übergangsbereich).

Bei der Reversierbewegung RB kann in der ersten Reversierphase beispielsweise der Egalisierungsschritt gemäß FIG 6 oder 7 auch teilweise oder ganz wegfallen.

Durch die Maßnahmen gemäß der Erfindung können im Übergang in den Freischnitt (Umfangsnut) sowie im Freischnitt selbst vorteilhafte Bewegungsabläufe erzielt werden. Die Arbeitsgeschwindigkeit des Werkzeuges kann möglichst hoch und gleichbleibend (stetig) verlaufen. Die Maschine (inkl. Steuerung) kann die Bewegung hochdynamsich abbilden. Im Freischnitt oder der Umfangsnut kann außerdem eine durchschraubbare Geometrie erzeugt werden.

Sieht man sich die Verhältnisse an der Maschine an, so ist erkennbar, dass im System eine Massenträgheit sowie eine Trägheit in den Antrieben und im Steuerungssystem physikalisch vorhanden ist. Um die Geschwindigkeit aus dem Gewinde auch in dem Freistich, d.h. der Umfangsnut, hoch zu halten, wird insbesondere durch eine stetige Bewegungsbahn von z-Achse (Variable T) und Drehachse (Variable $\varphi$) die Maschine in die Lage versetzt, vorzugsweise mit einer hohen Bahngeschwindigkeit diese Bewegung zu realisieren. Dies wirkt sich dann in einer hohen und stetigen Geschwindigkeit der wirksamen Werkzeugzähne und -schneiden aus. Dies ist wiederum für eine gleichmäßige Zerspanung günstig.

Um die Maschine zu programmieren, können die theoretischen Bewegungsbahnen in entsprechende NC-Sätze übertragen werden. Hierbei können geringfügige Abweichungen oder Annäherungen (in Form von beispielsweise zusammengesetzten Helixbewegungen ) vorkommen.

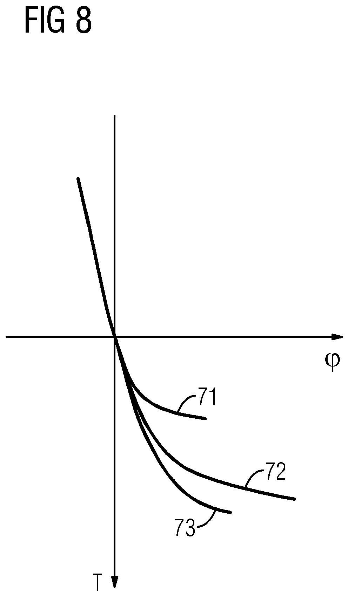

Die FIG 8 bis 10 zeigen Ausführungsbeispiele in einem Diagramm, in dem wieder die Eindringtiefe T über dem Drehwinkel $\varphi$ für die zweite Arbeitsphase (und ggf. erste Reversierphase) aufgetragen ist.

FIG 8 zeigt drei Ausführungsbeispiele mit Graphen oder Kurven 71 bis 73, bei denen eine konstante Bohrtiefe pro Steigung wie im Beispiel der FIG 4 für drei verschiedene Werte gewählt ist.

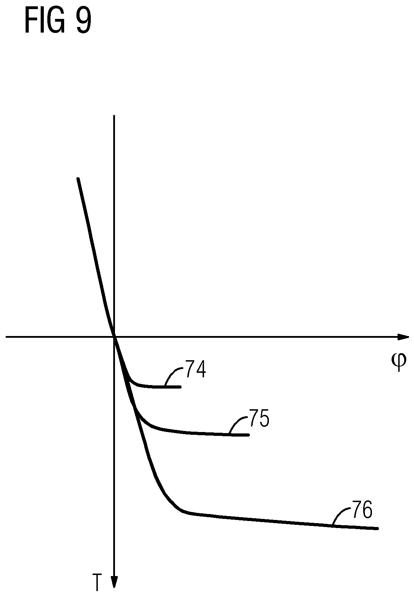

FIG 9 zeigt drei Ausführungsbeispiele mit Graphen oder Kurven 74 bis 76, bei denen ein konstanter Drehwinkel pro Steigung für drei verschiedene Werte gewählt ist.

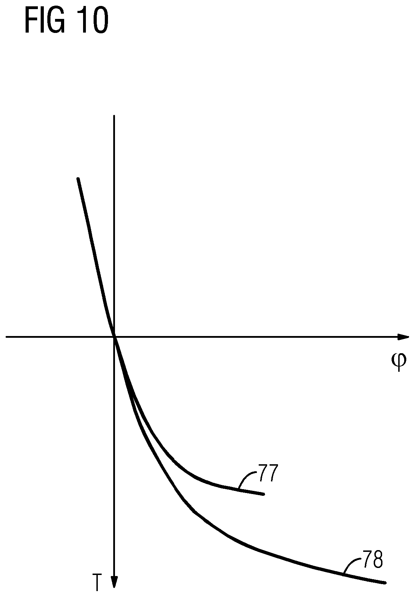

FIG 10 zeigt ein nicht zur Erfindung gehörendes Ausführungsbeispiel mit einem Graphen oder einer Kurve 77, der bzw. die einer Exponentialfunktion entspricht, beispielsweise gemäß $T = -e^{\frac{-P}{\pi \cdot fd} \cdot x} + 1$; wobei fd der Flankendurchmesser ist und x eine fortlaufende natürliche Zahl. Ferner zeigt FIG 10 ein nicht zur Erfindung gehörendes Ausführungsbeispiel mit einem Graphen oder einer Kurve 78, der mittels einer kubischen Spline-Funktion erstellt ist.

Die beschriebenen theoretischen Kurven oder Funktionen können insbesondere durch einen entsprechende Anzahl von einzelnen NC-Steuerungsdatensätze abgebildet werden.

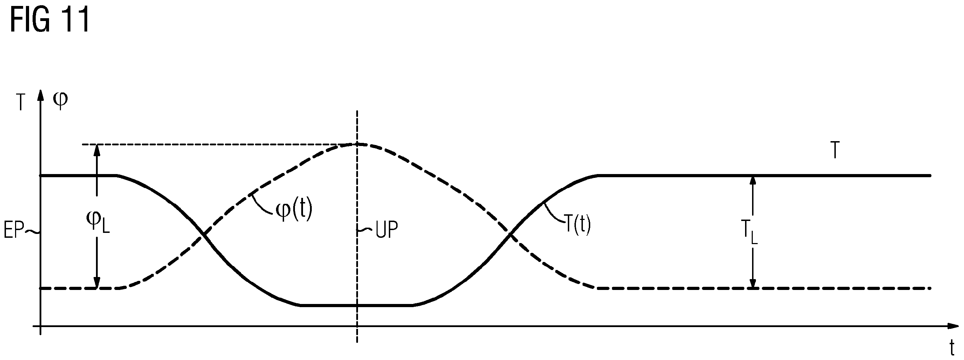

In FIG 11 ist nun ein Ausführungsbeispiel für die zeitliche Abhängigkeit oder Steuerung des Drehwinkels $\varphi = \varphi(t)$ als Funktion der Zeit t über den gesamten Zyklus zwischen dem Eintrittspunkt EP und dem Umkehrpunkt UP und wieder zurück gezeigt. Die Eindringtiefe $T(\varphi(t))$ ergibt sich als Funktion der Zeit t aufgrund der gewählten Abhängigkeit $T(\varphi)$, die im dargestellten Ausführungsbeispiel einer linearen Interpolation wie in FIG 4 entspricht.

**Bezugszeichen liste**

| 2 | Werkzeug |
| 3 | Bohrbereich |
| 4 | Gewindeerzeugungsbereich |
| 5 | Gewindeloch |
| 6 | Werkstück |
| 20 | Arbeitsbereich |
| 21 | Schaft |
| 30, 31 | Bohrhauptschneiden |
| 40 | erster Gewindezahn |
| 41 | zweiter Gewindezahn |
| 50 | Gewindegang |
| 51, 52, 53 | Nut |
| 55 | Gewindeprofil |
| 60 | Werkstückoberfläche |
| 71, 72, 73 | Graph |
| 74, 75, 76 | Graph |
| 77, 78 | Graph |
| a | Nutlänge |
| A | Werkzeugachse |
| AB | Abbremsbewegung |
| b | Gewindelücke |
| BB | Beschleunigungsbewegung |
| c | Gewindeprofilbreite |
| d | Kernlochdurchmesser |
| D | Gewindelochdurchmesser |
| E, E1, E2 | Transversalebene |
| M | Gewindemittelachse |
| P | Gewindesteigung |
| $P_1$ bis $P_{10}$ | Steigungsparameter |
| $S_1$ bis $S_{10}$ | Abbremsschritt |
| $S_{11}$ bis $S_{20}$ | Beschleunigungsschritt |
| T | Endringtiefe |
| $T_G$ | Gewindetiefe |
| $T_L$ | Gewindelochtiefe |
| $T_0$ bis $T_{10}$ | Tiefenwert |
| $T_i$, $T_n$ | Tiefenwert |
| $\Delta T$ | Eindringtiefenbereich |
| UP | Umkehrpunkt |
| VB | Vorwärtsbewegung |
| RB | Rückwärtsbewegung |
| $\varphi$ | Summierter Drehwinkel |
| $\Delta\varphi$ | Drehwinkelbereich |
| $\varphi_0$ bis $\varphi_{20}$ | Drehwinkelwert |
| $\varphi_i$, $\varphi_n$ | Drehwinkelwert |
| $\delta$ | Gewindesteigungswinkel |

**Patentansprüche**

1.  Verfahren zum Erzeugen eines Gewindes, insbesondere Innengewindes, mit einer vorgegebenen Gewindesteigung (P) und mit einem vorgegebenen Gewindeprofil (55) in einem Werkstück (6),

    a) bei dem ein Werkzeug (2) verwendet wird, das um eine durch das Werkzeug (2) verlaufende Werkzeugachse (A) drehbar und axial zur Werkzeugachse (A) bewegbar ist und das einen Gewindeerzeugungsbereich (4) aufweist,

    b) wobei der Gewindeerzeugungsbereich (4) wenigstens einen Gewindezahn (41,42) aufweist, der an die vorgegebene Gewindesteigung (P) angepasst ausgebildet und angeordnet ist, und ein Wirkprofil aufweist, das dem Gewindeprofil (55) des Gewindes (5) entspricht,

    c) und bei dem das Werkzeug (2) in einer Arbeitsbewegung (VB) während einer ersten Arbeitsphase in das Werkstück (6) oder zu dem Werkstück (6) hin bewegt wird,

    d) wobei die Arbeitsbewegung (VB) eine Drehbewegung mit einem vorgegebenen Drehsinn (VD, RD) um die Werkzeugachse (A) und eine gemäß der Gewindesteigung (P) mit der Drehbewegung synchronisierte axiale Vorschubbewegung in einer axialen Vorwärtsrichtung axial zur Werkzeugachse (A) umfasst, derart, dass einer vollen Umdrehung des Werkzeugs (2) um die Werkzeugachse (A) ein axialer Vorschub (V) des Werkzeugs (2) um die vorgegebene Gewindesteigung (P) entspricht,

    e) wobei während der Arbeitsbewegung (VB) der Gewindeerzeugungsbereich (4) das Gewinde (5) erzeugt,

    f) wobei das Werkzeug (2) in einer an die Arbeitsbewegung (VB) anschließenden Abbremsbewegung (AB) während einer zweiten Arbeitsphase weiter in das Werkstück (6) in derselben Vorwärtsrichtung wie bei der Arbeitsbewegung (VB) bis zu einem Umkehrpunkt (UP) bewegt wird,

    g) wobei die Abbremsbewegung (AB) eine Drehbewegung mit gleichbleibendem Drehsinn (VD, RD) wie bei der Arbeitsbewegung (VB) umfasst,

    h) wobei während der Abbremsbewegung (AB) die axiale Vorschubbewegung abhängig vom Drehwinkel der Drehbewegung des Werkzeugs (2) gemäß einer vorab gespeicherten eindeutigen Beziehung zwischen dem axialen Vorschub (V) des Werkzeugs (2) und dem Drehwinkel gesteuert wird und

    i) wobei der axiale Vorschub (V) des Werkzeugs (2) bei einer vollen Umdrehung zumindest während eines Teils der Abbremsbewegung (AB) betragsmäßig kleiner als die Gewindesteigung (P) ist und beim Umkehrpunkt (UP) Null ist, **dadurch gekennzeichnet,**

    j) **dass** während der Abbremsbewegung (AB) in mehreren aufeinanderfolgenden Abbremsschritten zueinander unterschiedliche Funktionen zwischen dem axialen Vorschub (V) des Werkzeugs (2) und dem Drehwinkel gewählt oder eingestellt werden,

    k) wobei während den mehreren Abbremsschritten der axiale Vorschub (V) eine lineare Funktion des Drehwinkels ist und wobei die Steigung, d.h. die Ableitung des axialen Vorschubs nach dem Drehwinkel, in jedem dieser Abbremsschritte konstant ist und betragsmäßig von einem Abbremsschritt zu einem darauffolgenden Abbremsschritt abnimmt.

**2.** Verfahren nach Anspruch 1, wobei die Drehgeschwindigkeit der Drehbewegung beim Umkehrpunkt (UP) Null ist und/oder bei dem der gesamte oder aufsummierte axiale Vorschub (V) des Werkzeuges während der Abbremsbewegung (AB) zwischen dem 0,1-fachen bis 2-fachen der Gewindesteigung (P) gewählt ist.

**3.** Verfahren nach Anspruch 1 oder 2, bei dem für die Arbeitsbewegung (VB) eine NC-Steuerung für einen Gewindeprozess, beispielsweise eine G33 Wegbedingung, mit der Gewindesteigung (P) des Gewindes (5) verwendet wird und in den mehreren Abbremsschritten ebenfalls eine, vorzugsweise die gleiche, NC-Steuerung für einen Gewindeprozess, beispielsweise eine G33 Wegbedingung, mit der jeweiligen konstanten Steigung als Gewindesteigungsparameter verwendet wird.

**4.** Verfahren nach einem der Ansprüche 1 bis 3, bei dem die unterschiedlichen Funktionen aufeinanderfolgender Abbremssschritte stetig aneinander gesetzt sind.

**5.** Verfahren nach einem der vorhergehenden Ansprüche, bei dem, insbesondere während eines Egalisierungsschrittes, der axiale Vorschub (V) während der Abbremsbewegung (AB) in einem Drehwinkel-Teilintervall Null ist und/oder in einem Drehwinkel-Teilintervall in zur Vorwärtsrichtung der Arbeitsbewegung (VB) entgegengesetzter Rückwärtsrichtung erfolgt.

**6.** Verfahren nach einem der vorhergehenden Ansprüche, bei dem der nach Erreichen des Umkehrpunktes (UP) eine Reversierbewegung des Werkzeuges eingeleitet wird, mit der das Werkzeug (2) aus dem Werkstück (6) bewegt wird, wobei die Reversierbewegung zunächst eine erste Reversierphase, mit der der Gewindeerzeugungsbereich (4) des Werkzeugs (2) zurück in den Gewindegang (50) des erzeugten Gewindes (5) geführt wird, und im Anschluss eine zweite Reversierphase, während der der Gewindeerzeugungsbereich (4) durch den Gewindegang (50) aus dem Werkstück (6) nach außen geführt wird, umfasst.

**7.** Verfahren nach Anspruch 6, bei der die Reversierbewegung in der ersten Reversierphase mit der betragsmäßig gleichen, nur in der Drehrichtung und Vorschubrichtung invertierten vorab gespeicherten eindeutigen Beziehung, insbesondere einer Funktion oder einer Abfolge von Funktionen, zwischen dem axialen Vorschub (V) des Werkzeugs (2) und dem Drehwinkel gesteuert wird wie in der Abbremsbewegung (AB) während einerzweiten Arbeitsphase, ggf. unter Auslassung oder Verkürzung des Egalisierungsschrittes, sofern vorhanden.

**8.** Verfahren nach einem der vorhergehenden Ansprüche,

a) bei dem ein Werkzeug (2) verwendet wird, das um eine durch das Werkzeug (2) verlaufende Werkzeugachse (A) drehbar und axial zur Werkzeugachse (A) bewegbar ist und das einen Bohrbereich (3) an einem vorderen oder freien Ende und einen Gewindeerzeugungsbereich (4), der axial zur Werkzeugachse (A) relativ zum Bohrbereich (3) versetzt angeordnet ist und radial zur Werkzeugachse (A) weiter nach außen ragt als der Bohrbereich (3), aufweist,
b) wobei während der Arbeitsbewegung (VB) der Bohrbereich (3) des Werkzeugs (2) ein Kernloch in dem Werkstück (6) erzeugt und der Gewindeerzeugungsbereich (4) einen unter der vorgegebenen Gewindesteigung (P) verlaufenden Gewindegang (50) in der Innenwandung des von dem Bohrbereich (3) erzeugten Kernloches erzeugt.

**Claims**

**1.** Method for producing a thread, in particular an internal thread, with a predetermined thread pitch (P) and with a predetermined thread profile (55) in a workpiece (6),

a) in which a tool (2) is used which can be rotated about a tool axis (A) running through the tool (2) and can be moved axially with respect to the tool axis (A) and which has a thread-generating region (4),
b) wherein the thread-generating region (4) has at least one thread tooth (41,42) which is formed and arranged to match the predetermined thread pitch (P) and has an effective profile which corresponds to the thread profile (55) of the thread (5),
c) and in which the tool (2) is moved into the workpiece (6) or towards the workpiece (6) in a working movement (VB) during a first working phase,
d) wherein the working movement (VB) comprises a rotary movement with a predetermined direction of rotation (VD, RD) about the tool axis (A) and an axial feed movement synchronized with the rotary movement according to the thread pitch (P) in an axial forward direction axially to the tool axis (A) in such a way that an axial feed (V) of the tool (2) by the predetermined thread pitch (P) corresponds to a full revolution of the tool (2) about the tool axis (A),

e) wherein during the working movement (VB) the thread-generating region (4) generates the thread (5),

f) wherein the tool (2), in a deceleration movement (AB) following the working movement (VB), is moved further into the workpiece (6) during a second working phase in the same forward direction as during the working movement (VB) up to a reversal point (UP),

g) where the deceleration movement (AB) comprises a rotary movement with a constant direction of rotation (VD, RD) as in the working movement (VB),

h) wherein during the deceleration movement (AB) the axial feed movement is controlled depending on the angle of rotation of the rotary movement of the tool (2) according to a previously stored unique relationship between the axial feed (V) of the tool (2) and the angle of rotation, and

i) wherein the axial feed (V) of the tool (2) during a full revolution is smaller in amount than the thread pitch (P) at least during part of the deceleration movement (AB) and is zero at the reversal point (UP), **characterized in that**

j) during the deceleration movement (AB), functions differing from one another are selected or set in a plurality of successive deceleration steps between the axial feed (V) of the tool (2) and the angle of rotation,

k) wherein during said plurality of deceleration steps the axial feed (V) is a linear function of the angle of rotation and wherein the slope, i.e. the derivative of the axial feed with respect to the angle of rotation, is constant in each of said deceleration steps and decreases in magnitude from one deceleration step to a subsequent deceleration step.

2. Method according to claim 1, wherein the rotational speed of the rotary movement at the reversal point (UP) is zero and/or wherein the total or summed axial feed (V) of the tool during the deceleration movement (AB) is selected between 0.1 times and 2 times the thread pitch (P).

3. Method according to claim 1 or 2, in which for the working movement (VB) an NC control for a threading process, for example a G33 path condition, with the thread pitch (P) of the thread (5) is used and in the several deceleration steps also an, preferably the same, NC control for a threading process, for example a G33 path condition, with the respective constant pitch is used as thread pitch parameter.

4. Method according to any of claims 1 to 3, in which the different functions of successive deceleration steps are set continuously against one another.

5. Method according to any of the preceding claims, in which, in particular during an equalizing step, the axial feed (V) during the deceleration movement (AB) is zero in a rotational angle subinterval and/or takes place in a rotational angle subinterval in the reverse direction opposite to the forward direction of the working movement (VB).

6. Method according to any of the preceding claims, in which, after reaching the reversal point (UP), a reversing movement of the tool is initiated, with which the tool (2) is moved out of the workpiece (6), wherein the reversing movement first comprises a first reversing phase, with which the thread-generating region (4) of the tool (2) is guided back into the thread (50) of the generated thread (5), and subsequently a second reversing phase, during which the thread-generating region (4) is guided out of the workpiece (6) through the thread (50).

7. Method according to claim 6, in which the reversing movement in the first reversing phase is controlled with the unambiguous relationship, in particular a function or a sequence of functions, between the axial feed (V) of the tool (2) and the angle of rotation, which is quantitatively the same, inverted only in the direction of rotation and feed direction, as in the deceleration movement (AB) during a second working phase, optionally omitting or shortening the equalizing step, if present.

8. Method according to any of the preceding claims,

a) in which a tool (2) is used which is rotatable about a tool axis (A) extending through the tool (2) and movable axially with respect to the tool axis (A) and which has a drilling region (3) at a front or free end and a thread-generating region (4) which is arranged axially offset with respect to the tool axis (A) relative to the drilling region (3) and projects radially outwardly with respect to the tool axis (A) further than the drilling region (3),

b) wherein during the working movement (VB) the drilling region (3) of the tool (2) produces a core hole in the workpiece (6) and the thread-generating region (4) produces a thread (50) extending below the predetermined thread pitch (P) in the inner wall of the core hole produced by the drilling region (3).

## Revendications

1. Procédé de réalisation d'un filetage, en particulier d'un filetage intérieur, avec un pas de filetage (P) prédéfini et avec un profil de filetage (55) prédéfini dans une pièce à usiner (6),

a) dans lequel on utilise un outil (2) qui peut tourner autour d'un axe d'outil (A) passant par l'outil (2) et qui est mobile axialement par rapport à l'axe d'outil (A) et qui présente une zone de production de filet (4),

b) la zone de production de filet (4) présentant au moins une dent de filet (41, 42) qui est réalisée et disposée de manière adaptée au pas de filet (P) prédéfini, et présentant un profil actif qui correspond au profil de filet (55) du filet (5),

c) et dans lequel l'outil (2) est déplacé dans la pièce à usiner (6) ou vers la pièce à usiner (6) dans un mouvement de travail (VB) pendant une première phase de travail,

d) le mouvement de travail (VB) comprenant un mouvement de rotation avec un sens de rotation (VD, RD) prédéterminé autour de l'axe d'outil (A) et un mouvement d'avance axial synchronisé avec le mouvement de rotation selon le pas de filetage (P) dans une direction axiale vers l'avant axialement par rapport à l'axe d'outil (A), de telle sorte qu'à une rotation complète de l'outil (2) autour de l'axe d'outil (A) correspond une avance axiale (V) de l'outil (2) selon le pas de filetage (P) prédéterminé,

e) dans lequel, pendant le mouvement de travail (VB), la zone de production de filet (4) produit le filet (5),

f) l'outil (2) étant déplacé, dans un mouvement de freinage (AB) faisant suite au mouvement de travail (VB), pendant une deuxième phase de travail, plus loin dans la pièce à usiner (6) dans la même direction vers l'avant que lors du mouvement de travail (VB) jusqu'à un point d'inversion (UP),

g) le mouvement de freinage (AB) comprenant un mouvement de rotation avec un sens de rotation (VD, RD) constant comme pour le mouvement de travail (VB),

h) le mouvement d'avance axiale étant commandé pendant le mouvement de freinage (AB) en fonction de l'angle de rotation du mouvement de rotation de l'outil (2) selon une relation univoque préenregistrée entre l'avance axiale (V) de l'outil (2) et l'angle de rotation, et

i) l'avance axiale (V) de l'outil (2) étant, pour une rotation complète, au moins pendant une partie du mouvement de freinage (AB), inférieure en valeur absolue au pas de filetage (P) et nulle au point d'inversion (UP),

**caractérisé en ce que**

j) **en ce que**, pendant le mouvement de freinage (AB), des fonctions différentes les unes des autres entre l'avance axiale (V) de l'outil (2) et l'angle de rotation sont sélectionnées ou réglées en plusieurs étapes de freinage successives,

k) dans lequel, pendant la pluralité d'étapes de freinage, l'avance axiale (V) est une fonction linéaire de l'angle de rotation et dans lequel la pente, c'est-à-dire la dérivée de l'avance axiale par rapport à l'angle de rotation, est constante dans chacune de ces étapes de freinage et diminue en valeur absolue d'une étape de freinage à une étape de freinage suivante.

2. Procédé selon la revendication 1, dans lequel la vitesse de rotation du mouvement de rotation au point d'inversion (UP) est nulle et/ou dans lequel l'avance axiale totale ou cumulée (V) de l'outil pendant le mouvement de décélération (AB) est choisie entre 0,1 fois et 2 fois le pas de vis (P).

3. Procédé selon la revendication 1 ou 2, dans lequel on utilise pour le mouvement de travail (VB) une commande numérique pour un processus de filetage, par exemple une condition de course G33, avec le pas de filetage (P) du filetage (5) et, dans les plusieurs étapes de freinage, on utilise également une, de préférence la même, commande numérique pour un processus de filetage, par exemple une condition de course G33, avec le pas constant respectif comme paramètre de pas de filetage.

4. Procédé selon l'une quelconque des revendications 1 à 3, dans lequel les différentes fonctions des étapes de freinage successives sont mises bout à bout de manière continue.

5. Procédé selon l'une des revendications précédentes, dans lequel, notamment lors d'une étape d'égalisation, l'avance axiale (V) est nulle pendant le mouvement de freinage (AB) dans un sous-intervalle d'angle de rotation et/ou s'effectue dans un sous-intervalle d'angle de rotation en sens inverse du sens d'avance du mouvement de travail (VB).

6. Procédé selon l'une des revendications précédentes, dans lequel, une fois le point d'inversion (UP) atteint, un mouvement d'inversion de l'outil est initié, avec lequel l'outil (2) est déplacé hors de la pièce (6), le mouvement d'inversion comprenant d'abord une première phase d'inversion, avec laquelle la zone de génération de filet (4) de l'outil (2) est ramenée dans le pas de vis (50) du filet (5) généré, et ensuite une deuxième phase d'inversion, pendant laquelle la zone de génération de filet (4) est guidée vers l'extérieur de la pièce (6) à travers le pas de vis (50).

7. Procédé selon la revendication 6, dans lequel le mouvement d'inversion est commandé dans la première phase d'inversion avec la même relation univoque, en particulier une fonction ou une séquence de fonctions, entre l'avance axiale (V) de l'outil (2) et l'angle de rotation, mémorisée au préalable, inversée uniquement dans le sens de rotation et le sens d'avance, que dans le mouvement de freinage (AB) pendant une deuxième phase de travail, le cas échéant en omettant ou en raccourcissant l'étape d'égalisation, si elle existe.

**8.** Procédé selon l'une quelconque des revendications précédentes,

a) dans lequel on utilise un outil (2) qui peut tourner autour d'un axe d'outil (A) s'étendant à travers l'outil (2) et qui est mobile axialement par rapport à l'axe d'outil (A) et qui présente une zone de perçage (3) à une extrémité avant ou libre et une zone de production de filet (4) qui est décalée axialement par rapport à l'axe d'outil (A) par rapport à la zone de perçage (3) et qui fait saillie radialement vers l'extérieur par rapport à l'axe d'outil (A) plus loin que la zone de perçage (3),
b) dans lequel, pendant le mouvement de travail (VB), la zone de perçage (3) de l'outil (2) produit un trou de carotte dans la pièce à usiner (6) et la zone de production de filet (4) produit un filet (50) s'étendant sous le pas de filet prédéterminé (P) dans la paroi intérieure du trou de carotte produit par la zone de perçage (3).

# FIG 1

# FIG 2

FIG 3

FIG 4

EP 3 710 193 B1

FIG 5

EP 3 710 193 B1

FIG 6

FIG 7

FIG 8

FIG 9

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016008478 A1
- DE 102005022503 A1
- DE 102016008477 A1

**In der Beschreibung aufgeführte Nicht-Patentliteratur**

- Handbuch der Gewindetechnik und Frästechnik, Herausgeber: EMUGE-FRANKEN. Verlag: Publicis Corporate Publishing, 2004
- EMUGE-Handbuch. 181-298
- EMUGE-Handbuch. 325-372
- EMUGE-Handbuch. 373-404
- EMUGE-Handbuch. 250, , 251, , 284, , 285
- *EMUGE-Handbuch,* 322
- EMUGE-Handbuch. 255
- EMUGE-Handbuch. 299-324
- EMUGE-Handbuch. 308, , 309
- EMUGE-Handbuch. 322
- EMUGE-Handbuch. 310
- EMUGE-Handbuch. 281, , 357-359
- EMUGE-Handbuch. 161-179
- EMUGE-Handbuch. 354
- EMUGE-Handbuch. 355